# EUROPEAN PATENT APPLICATION

(11) **EP 4 808 000 A1**
(43) Date of publication of application: **16.09.2026**
(21) Application number: 24887698.9
(22) Date of filing: 12.10.2024
(51) Int. Cl.: H04B 1/7136

(54) **FREQUENCY HOPPING INFORMATION DETERMINATION METHOD AND APPARATUS, TERMINAL, AND NETWORK DEVICE**

(30) Priority: 08.11.2023 CN 202311482213
(71) Applicant: Datang Mobile Communications Equipment Co., Ltd., Beijing 100085 (CN)
(72) Inventor: ZHAO, Yue, Beijing 100085 (CN); SI, Qianqian, Beijing 100085 (CN); GAO, Xuejuan, Beijing 100085 (CN)
(74) Representative: Studio Torta S.p.A.
(86) International application number: PCT/CN2024/124293
(87) International publication number: WO 2025/098085

(57) **Abstract**

The present invention relates to the technical field of communications, and provides a frequency hopping information determination method and apparatus, a terminal, and a network device. The method comprises: a terminal receives frequency hopping related information sent by a network device; and on the basis of the frequency hopping related information, the terminal determines whether to enable frequency hopping on a subband full duplex (SBFD) symbol and/or determines a frequency offset for frequency hopping, and determines whether to enable frequency hopping on an uplink symbol and/or determines a frequency offset for frequency hopping, wherein the frequency hopping related information indicates information about whether to enable frequency hopping and/or information of the frequency offset for frequency hopping.

## Description

### CROSS-REFERENCE TO RELATED APPLICATION

The present disclosure claims the priority of Chinese patent application No. 202311482213.8 filed on November 8, 2023 before CNIPA, entitled "Frequency Hopping Information Determination Method, Apparatus, Terminal, and Network Device", the entire contents of which are incorporated herein by reference.

### TECHNICAL FIELD

The present disclosure relates to the field of communication technologies, and in particular, to a frequency hopping information determination method and apparatus, a terminal, and a network device.

### BACKGROUND

To resolve coverage, delay, and capacity issues of uplink transmission in a Time Division Duplex (TDD) mode, research is being conducted on non-overlapping Subband Full Duplex (SBFD), which divides frequency domain resources into multiple non-overlapping subbands, with uplink and downlink frequency domain resources located in different subbands, referred to as subband full duplex for short.

Since the frequency domain resources (uplink subbands) used for uplink transmission on SBFD symbols are fewer than those on full uplink symbols, for multi-slot uplink transmission across SBFD symbols/slots and full uplink symbols/slots, the base station can ensure that the frequency hopping position is within the uplink subband range through implementation. However, this results in high complexity of base station implementation and limited frequency hopping gain.

### SUMMARY

An objective of the present disclosure is to provide a frequency hopping information determination method and apparatus, a terminal, and a network device, so as to reduce the implementation complexity of the base station.

The embodiments of the present disclosure provide a frequency hopping information determination method. The method is applied to a terminal. The method includes:
receiving, by a terminal, frequency hopping related information sent by a network device;
determining, by the terminal based on the frequency hopping related information, whether to enable frequency hopping and/or a frequency offset of frequency hopping on a Subband Full Duplex (SBFD) symbol, and determining whether to enable frequency hopping and/or a frequency offset of frequency hopping on an uplink symbol; wherein the frequency hopping related information indicates whether to enable frequency hopping and/or frequency offset information of frequency hopping.

Optionally, determining, by the terminal based on the frequency hopping related information, whether to enable frequency hopping on the SBFD symbol and determining whether to enable frequency hopping on the uplink symbol includes at least one of the following:
if the frequency hopping related information indicates that frequency hopping is disabled, disabling frequency hopping on the SBFD symbol and disabling frequency hopping on the uplink symbol;
if the frequency hopping related information indicates that frequency hopping is enabled, enabling frequency hopping on the uplink symbol, and determining, based on first information, whether to enable frequency hopping on the SBFD symbol.

Optionally, the determining based on the first information whether to enable frequency hopping on the SBFD symbol includes at least one of the following:
the first information includes frequency domain resource configuration information on the SBFD symbol and/or frequency domain resource allocation information on the SBFD symbol; if it is determined based on the first information that a quantity of Resource Blocks (RBs) corresponding to the frequency domain resources allocated or configured on the SBFD symbol is greater than or equal to a first value, disabling frequency hopping on the SBFD symbol; if a quantity of RBs corresponding to the frequency domain resources allocated on the SBFD symbol is less than or equal to the first value, enabling frequency hopping on the SBFD symbol; if the first value is related to a size of an uplink subband, the first information further includes uplink subband information;
the first information includes frequency domain resource configuration information on the SBFD symbol and/or frequency domain resource allocation information on the SBFD symbol, and uplink subband information; if a frequency domain position of each hop determined according to a starting RB of each of two hops is within an uplink subband range indicated by the uplink subband information, then enabling frequency hopping on the SBFD symbol; if a frequency domain position determined according to a starting RB of any one of two hops is outside an uplink subband range, then disabling frequency hopping on the SBFD symbol;
the first information includes frequency domain resource configuration information on the SBFD symbol and/or frequency domain resource allocation information on the SBFD symbol, and frequency offset information of frequency hopping; if frequency offset between starting RBs of two hops is greater than or equal to a second value, then enabling frequency hopping on the SBFD symbol; if frequency offset between starting RBs of two hops is less than or equal to a second value, then disabling frequency hopping on the SBFD symbol;
the first information includes frequency domain resource configuration information on the SBFD symbol and/or frequency domain resource allocation information on the SBFD symbol, uplink subband information, and frequency offset information of frequency hopping; if a frequency domain position of each hop determined according to a starting RB of each of two hops is within an uplink subband range indicated by the uplink subband information, and frequency offset between starting RBs of two hops is greater than or equal to the second value, then enabling frequency hopping on the SBFD symbol; if a frequency domain position determined according to a starting RB of any one of two hops is outside an uplink subband range indicated by the uplink subband information, and/or the frequency offset between starting RBs of two hops is less than or equal to the second value, then disabling frequency hopping on the SBFD symbol.

Optionally, the method further includes: determining a starting RB position of each hop in the two hops according to a first starting RB position indicated by the frequency domain resource allocation information or the frequency domain configuration information on the SBFD symbol and the frequency offset indicated by the frequency offset information of frequency hopping; determining whether a frequency domain position of each hop is within the uplink subband range indicated by the uplink subband information according to a RB length indicated by the frequency domain resource allocation information or the frequency domain resource configuration information on the SBFD symbol and the starting RB position of each hop.

Optionally, the method further includes: determining a starting RB position of each hop in the two hops according to a first starting RB position indicated by the frequency domain resource allocation information or the frequency domain resource configuration information on the SBFD symbol and the frequency offset indicated by the frequency offset information of frequency hopping; determining whether the frequency offset between starting RBs of the two hops is greater than or equal to the second value according to a starting RB position of each hop.

Optionally, determining the starting RB position of each hop in the two hops according to the first starting RB position indicated by the frequency domain resource allocation information or the frequency domain resource configuration information on the SBFD symbol and the frequency offset indicated by the frequency offset information of frequency hopping includes: determining the starting RB position of each hop in the two hops according to the first starting RB position indicated by the frequency domain resource allocation information or the frequency domain resource configuration information on the SBFD symbol, the frequency offset indicated by the frequency offset information of frequency hopping, and second information;
wherein the second information includes at least one of the following: a quantity of RBs included in a Bandwidth Part (BWP); a quantity of RBs included in the uplink subband; a slot index of a slot where the multi-slot transmission is located; an index of a SBFD symbol within a slot range where the multi-slot transmission is located; an index of an uplink symbol within a slot range where the multi-slot transmission is located; an index of a repeated transmission count; a relative index of a slot where the multi-slot transmission is located; an index of a SBFD configuration period; an index of a Time Division Duplex (TDD) configuration period.

Optionally, determining, by the terminal based on the frequency hopping related information, the frequency offset of frequency hopping on the SBFD symbol and determining the frequency offset of frequency hopping on the uplink symbol includes at least one of the following:
determining that the frequency offset on the uplink symbol is the frequency offset of frequency hopping indicated in the frequency hopping related information, and determining the frequency offset on the SBFD symbol according to a first rule;
determining that the frequency offset on the SBFD symbol is the frequency offset of frequency hopping indicated in the frequency hopping related information, and determining the frequency offset on the uplink symbol according to a second rule.

Optionally, the first rule includes at least one of the following:
determining the frequency offset on the SBFD symbol based on the frequency offset of frequency hopping indicated in the frequency hopping related information, an uplink BWP bandwidth, and an uplink subband bandwidth;
if an activated uplink BWP bandwidth is less than a third value, then the frequency offset on the SBFD symbol is a frequency offset corresponding to a first index; if an activated uplink BWP bandwidth is greater than or equal to the third value, then the frequency offset on the SBFD symbol is a frequency offset corresponding to a second index; the first index and the second index are related to the index corresponding to the frequency offset of frequency hopping indicated in the frequency hopping related information.

Optionally, the second rule includes at least one of the following:
determining the frequency offset on the uplink symbol based on the frequency offset of frequency hopping indicated in the frequency hopping related information, the uplink BWP bandwidth, and the uplink subband bandwidth;
if the activated uplink BWP bandwidth is less than the third value, then the frequency offset on the uplink symbol is the frequency offset corresponding to the first index; if the activated uplink BWP bandwidth is greater than or equal to the third value, then the frequency offset on the uplink symbol is the frequency offset corresponding to the second index; the first index and the second index are related to an index corresponding to the frequency offset of frequency hopping indicated in the frequency hopping related information.

Optionally, determining the frequency offset on the SBFD symbol based on the frequency offset of frequency hopping indicated in the frequency hopping related information, the uplink BWP bandwidth, and the uplink subband bandwidth includes: determining the frequency offset on the SBFD symbol by the following formula: $\left⌊\frac{M}{Uplink BWP Bandwidth}\right⌋ ∗ Uplink Subband Bandwidth ;$ or $\left⌈\frac{M}{UplinkBWPBandwidth}\right⌉ ∗ UplinkSubbandBandwidth ;$ wherein M is the frequency offset of frequency hopping indicated in the frequency hopping related information; the uplink BWP bandwidth represents a quantity of RBs occupied by the uplink BWP, and the uplink subband bandwidth represents a quantity of RBs occupied by the uplink subband.

Optionally, determining the frequency offset on the uplink symbol based on the frequency offset of frequency hopping indicated in the frequency hopping related information, the uplink BWP bandwidth, and the uplink subband bandwidth includes: determining the frequency offset on the uplink symbol by the following formula: $\left⌊\frac{M}{UplinkSubbandBandwidth}\right⌋ ∗ UplinkBWPBandwidth ;$ or $\left⌈\frac{M}{UplinkSubbandBandwidth}\right⌉ ∗ UplinkBWPBandwidth ;$ wherein M is the frequency offset of frequency hopping indicated in the frequency hopping related information; the uplink BWP bandwidth represents a quantity of RBs occupied by the uplink BWP, and the uplink subband bandwidth represents a quantity of RBs occupied by the uplink subband.

Optionally, the first index is: mod (X+1, 2); the second index is: mod (X+Q, 4); wherein X is the index corresponding to the frequency offset of frequency hopping indicated in the frequency hopping related information; Q is 1, 2, or 3.

Optionally, receiving the frequency hopping related information sent by the network device includes:
receiving Downlink Control Information (DCI) scheduling a Physical Uplink Shared Channel (PUSCH), wherein the DCI carries the frequency hopping related information; the frequency hopping related information includes frequency offset information of frequency hopping;
the method further includes: determining a length of a first field in the DCI based on a bandwidth of the activated uplink BWP and/or a bandwidth of the uplink subband, wherein the first field is used to indicate the frequency offset information of frequency hopping.

Optionally, determining the length of the first field in the DCI based on the bandwidth of the activated uplink BWP and/or the bandwidth of the uplink subband includes:
if the PUSCH scheduled by the DCI is within the uplink subband range, and the bandwidth of the activated uplink BWP or the bandwidth of the uplink subband is less than a fourth value, the length of the first field is 1 bit;
if the PUSCH scheduled by the DCI is within the uplink subband range, and the bandwidth of the activated uplink BWP or the bandwidth of the uplink subband is greater than or equal to the fourth value, the length of the first field is 2 bits.

Optionally, the DCI further includes a second field, and the second field is used to indicate whether the PUSCH scheduled by the DCI is located within the uplink subband range or within the activated uplink BWP range.

Some embodiments of the present disclosure provide a frequency hopping information determination method. The method includes:
sending, by a network device, frequency hopping related information to a terminal, wherein the frequency hopping related information is used by the terminal to determine whether to enable frequency hopping and/or a frequency offset of frequency hopping on the SBFD symbol, and determine whether to enable frequency hopping and/or a frequency offset of frequency hopping on the uplink symbol;
wherein the frequency hopping related information indicates whether to enable frequency hopping and/or frequency offset information of frequency hopping.

Some embodiments of the present disclosure provide a terminal. The terminal includes: a memory, a transceiver, and a processor, wherein the memory is configured to store a computer program; the transceiver is configured to receive and send data under the control of the processor; the processor is configured to read the computer program in the memory and perform the following operations:
receiving frequency hopping related information sent by a network device;
determining, based on the frequency hopping related information, whether to enable frequency hopping and/or a frequency offset of frequency hopping on a Subband Full Duplex (SBFD) symbol, and determining whether to enable frequency hopping and/or a frequency offset of frequency hopping on an uplink symbol; wherein the frequency hopping related information indicates whether to enable frequency hopping and/or frequency offset information of frequency hopping.

Optionally, the processor is configured to read the computer program in the memory and perform at least one of the following operations:
if the frequency hopping related information indicates that frequency hopping is disabled, disabling frequency hopping on the SBFD symbol and disabling frequency hopping on the uplink symbol;
if the frequency hopping related information indicates that frequency hopping is enabled, enabling frequency hopping on the uplink symbol, and determining, based on first information, whether to enable frequency hopping on the SBFD symbol.

Optionally, the processor is configured to read the computer program in the memory and perform at least one of the following operations:
the first information includes frequency domain resource configuration information on the SBFD symbol and/or frequency domain resource allocation information on the SBFD symbol; if it is determined based on the first information that a quantity of Resource Blocks (RBs) corresponding to the frequency domain resources allocated or configured on the SBFD symbol is greater than or equal to a first value, disabling frequency hopping on the SBFD symbol; if a quantity of RBs corresponding to the frequency domain resources allocated on the SBFD symbol is less than or equal to the first value, enabling frequency hopping on the SBFD symbol; if the first value is related to a size of an uplink subband, the first information further includes uplink subband information;
the first information includes frequency domain resource configuration information on the SBFD symbol and/or frequency domain resource allocation information on the SBFD symbol, and uplink subband information; if a frequency domain position of each hop determined according to a starting RB of each of two hops is within an uplink subband range indicated by the uplink subband information, then enabling frequency hopping on the SBFD symbol; if a frequency domain position determined according to a starting RB of any one of two hops is outside an uplink subband range, then disabling frequency hopping on the SBFD symbol;
the first information includes frequency domain resource configuration information on the SBFD symbol and/or frequency domain resource allocation information on the SBFD symbol, and frequency offset information of frequency hopping; if frequency offset between starting RBs of two hops is greater than or equal to a second value, then enabling frequency hopping on the SBFD symbol; if frequency offset between starting RBs of two hops is less than or equal to a second value, then disabling frequency hopping on the SBFD symbol;
the first information includes frequency domain resource configuration information on the SBFD symbol and/or frequency domain resource allocation information on the SBFD symbol, uplink subband information, and frequency offset information of frequency hopping; if a frequency domain position of each hop determined according to a starting RB of each of two hops is within an uplink subband range indicated by the uplink subband information, and frequency offset between starting RBs of two hops is greater than or equal to the second value, then enabling frequency hopping on the SBFD symbol; if a frequency domain position determined according to a starting RB of any one of two hops is outside an uplink subband range indicated by the uplink subband information, and/or the frequency offset between starting RBs of two hops is less than or equal to the second value, then disabling frequency hopping on the SBFD symbol.

Optionally, the processor is configured to read the computer program in the memory and perform the following operations:
determining a starting RB position of each hop in the two hops according to a first starting RB position indicated by the frequency domain resource allocation information or the frequency domain configuration information on the SBFD symbol and the frequency offset indicated by the frequency offset information of frequency hopping;
determining whether a frequency domain position of each hop is within the uplink subband range indicated by the uplink subband information according to a RB length indicated by the frequency domain resource allocation information or the frequency domain resource configuration information on the SBFD symbol and the starting RB position of each hop.

Optionally, the processor is configured to read the computer program in the memory and perform the following operations:
determining a starting RB position of each hop in the two hops according to a first starting RB position indicated by the frequency domain resource allocation information or the frequency domain resource configuration information on the SBFD symbol and the frequency offset indicated by the frequency offset information of frequency hopping; determining whether the frequency offset between starting RBs of the two hops is greater than or equal to the second value according to a starting RB position of each hop.

Optionally, the processor is configured to read the computer program in the memory and perform the following operations:
determining the starting RB position of each hop in the two hops according to the first starting RB position indicated by the frequency domain resource allocation information or the frequency domain resource configuration information on the SBFD symbol, the frequency offset indicated by the frequency offset information of frequency hopping, and second information;
wherein the second information includes at least one of the following:
   a quantity of RBs included in a Bandwidth Part (BWP);
   a quantity of RBs included in the uplink subband;
   a slot index of a slot where the multi-slot transmission is located;
   an index of a SBFD symbol within a slot range where the multi-slot transmission is located;
   an index of an uplink symbol within a slot range where the multi-slot transmission is located;
   an index of a repeated transmission count;
   a relative index of a slot where the multi-slot transmission is located;
   an index of a SBFD configuration period;
   an index of a Time Division Duplex (TDD) configuration period.

Optionally, the processor is configured to read the computer program in the memory and perform at least one of the following operations:
determining that the frequency offset on the uplink symbol is the frequency offset of frequency hopping indicated in the frequency hopping related information, and determining the frequency offset on the SBFD symbol according to a first rule;
determining that the frequency offset on the SBFD symbol is the frequency offset of frequency hopping indicated in the frequency hopping related information, and determining the frequency offset on the uplink symbol according to a second rule.

Optionally, the first rule includes at least one of the following:
determining the frequency offset on the SBFD symbol based on the frequency offset of frequency hopping indicated in the frequency hopping related information, an uplink BWP bandwidth, and an uplink subband bandwidth;
if an activated uplink BWP bandwidth is less than a third value, then the frequency offset on the SBFD symbol is a frequency offset corresponding to a first index; if an activated uplink BWP bandwidth is greater than or equal to the third value, then the frequency offset on the SBFD symbol is a frequency offset corresponding to a second index; the first index and the second index are related to the index corresponding to the frequency offset of frequency hopping indicated in the frequency hopping related information.

Optionally, the processor is configured to read the computer program in the memory and perform at least one of the following operations:
determining the frequency offset on the SBFD symbol by the following formula: $\left⌊\frac{M}{Uplink BWP Bandwidth}\right⌋ ∗ Uplink Subband Bandwidth ;$ or $\left⌈\frac{M}{UplinkBWPBandwidth}\right⌉ ∗ UplinkSubbandBandwidth ;$
wherein M is the frequency offset of frequency hopping indicated in the frequency hopping related information; the uplink BWP bandwidth represents a quantity of RBs occupied by the uplink BWP, and the uplink subband bandwidth represents a quantity of RBs occupied by the uplink subband.

Optionally, the processor is configured to read the computer program in the memory and perform at least one of the following operations:
determining the frequency offset on the uplink symbol by the following formula: $\left⌊\frac{M}{UplinkSubbandBandwidth}\right⌋ ∗ UplinkBWPBandwidth ;$ or $\left⌈\frac{M}{UplinkSubbandBandwidth}\right⌉ ∗ UplinkBWPBandwidth ;$
wherein M is the frequency offset of frequency hopping indicated in the frequency hopping related information; the uplink BWP bandwidth represents a quantity of RBs occupied by the uplink BWP, and the uplink subband bandwidth represents a quantity of RBs occupied by the uplink subband.

Optionally, the first index is: mod (X+1, 2); the second index is: mod (X+Q, 4); wherein X is the index corresponding to the frequency offset of frequency hopping indicated in the frequency hopping related information; Q is 1, 2, or 3.

Optionally, the second rule includes at least one of the following:
determining the frequency offset on the uplink symbol based on the frequency offset of frequency hopping indicated in the frequency hopping related information, the uplink BWP bandwidth, and the uplink subband bandwidth;
if the activated uplink BWP bandwidth is less than the third value, then the frequency offset on the uplink symbol is the frequency offset corresponding to the first index; if the activated uplink BWP bandwidth is greater than or equal to the third value, then the frequency offset on the uplink symbol is the frequency offset corresponding to the second index; the first index and the second index are related to an index corresponding to the frequency offset of frequency hopping indicated in the frequency hopping related information.

Optionally, the processor is configured to read the computer program in the memory and perform the following operations:
receiving Downlink Control Information (DCI) scheduling a Physical Uplink Shared Channel (PUSCH), wherein the DCI carries the frequency hopping related information; the frequency hopping related information includes frequency offset information of frequency hopping;
determining a length of a first field in the DCI based on a bandwidth of the activated uplink BWP and/or a bandwidth of the uplink subband, wherein the first field is used to indicate the frequency offset information of frequency hopping.

Optionally, the processor is configured to read the computer program in the memory and perform the following operations:
if the PUSCH scheduled by the DCI is within the uplink subband range, and the bandwidth of the activated uplink BWP or the bandwidth of the uplink subband is less than a fourth value, the length of the first field is 1 bit;
if the PUSCH scheduled by the DCI is within the uplink subband range, and the bandwidth of the activated uplink BWP or the bandwidth of the uplink subband is greater than or equal to the fourth value, the length of the first field is 2 bits.

Optionally, the DCI further includes a second field, and the second field is used to indicate whether the PUSCH scheduled by the DCI is located within the uplink subband range or within the activated uplink BWP range.

Some embodiments of the present disclosure provide a network device. The network device includes: a memory, a transceiver, and a processor,
wherein the memory is configured to store a computer program; the transceiver is configured to receive and send data under the control of the processor; the processor is configured to read the computer program in the memory and perform the following operations:
sending frequency hopping related information to a terminal, wherein the frequency hopping related information is used by the terminal to determine whether to enable frequency hopping and/or a frequency offset of frequency hopping on the SBFD symbol, and determine whether to enable frequency hopping and/or a frequency offset of frequency hopping on the uplink symbol;
wherein the frequency hopping related information indicates whether to enable frequency hopping and/or frequency offset information of frequency hopping.

Some embodiments of the present disclosure provide a frequency hopping information determination apparatus. The apparatus includes:
a first receiving unit, configured to receive frequency hopping related information sent by a network device;
a first determining unit, configured to determine, based on the frequency hopping related information, whether to enable frequency hopping and/or a frequency offset of frequency hopping on a Subband Full Duplex (SBFD) symbol, and determine whether to enable frequency hopping and/or a frequency offset of frequency hopping on an uplink symbol;
wherein the frequency hopping related information indicates whether to enable frequency hopping and/or frequency offset information of frequency hopping.

Some embodiments of the present disclosure provide a frequency hopping information determination apparatus. The apparatus includes:
a first sending unit, configured to send frequency hopping related information to a terminal, wherein the frequency hopping related information is used by the terminal to determine whether to enable frequency hopping and/or a frequency offset of frequency hopping on the SBFD symbol, and determine whether to enable frequency hopping and/or a frequency offset of frequency hopping on the uplink symbol;
wherein the frequency hopping related information indicates whether to enable frequency hopping and/or frequency offset information of frequency hopping.

Some embodiments of the present disclosure provide a processor-readable storage medium, on which a computer program is stored, wherein when the computer program is executed by a processor, the steps of the frequency hopping information determination method according to the above.

The beneficial effects of the above technical solutions of the present disclosure are as follows:

in the embodiments of the present disclosure, the terminal can determine the frequency hopping parameters of two slot types, namely SBFD slots and uplink slots, based on a set of frequency hopping related information indicated by the network device. Without increasing signaling overhead, the implementation complexity of the network device is reduced, and the flexibility of frequency hopping configuration and frequency hopping gain are improved.

### BRIEF DESCRIPTION OF THE DRAWINGS

FIG. 1 is a first schematic flowchart of a frequency hopping information determination method according to some embodiments of the present disclosure;
FIG. 2 is a second schematic flowchart of a frequency hopping information determination method according to some embodiments of the present disclosure;
FIG. 3 is a first schematic structural diagram of a frequency hopping information determination apparatus according to some embodiments of the present disclosure;
FIG. 4 is a second schematic structural diagram of a frequency hopping information determination apparatus according to some embodiments of the present disclosure;
FIG. 5 is a schematic structural diagram of a terminal according to some embodiments of the present disclosure;
FIG. 6 is a schematic structural diagram of a network device according to some embodiments of the present disclosure.

### DETAILED DESCRIPTION

To make the technical problems, technical solutions, and advantages of the present disclosure clearer, the following will describe in detail with reference to the accompanying drawings and specific embodiments. In the following description, specific details such as specific configurations and components are provided only to assist in a comprehensive understanding of the embodiments of the present disclosure. Therefore, it should be apparent to those skilled in the art that various changes and modifications can be made to the embodiments described herein without departing from the scope and spirit of the present disclosure. In addition, descriptions of known functions and constructions are omitted for clarity and conciseness.

It should be understood that "one embodiment" or "an embodiment" mentioned throughout the specification means that a specific feature, structure, or characteristic related to the embodiment is included in at least one embodiment of the present disclosure. Thus, the appearances of "in one embodiment" or "in an embodiment" in various places throughout the specification are not necessarily referring to the same embodiment. Furthermore, these specific features, structures, or characteristics may be combined in any suitable manner in one or more embodiments.

In various embodiments of the present disclosure, it should be understood that the sequence numbers of the following processes do not imply the order of execution, and the execution order of each process should be determined by its function and internal logic, and should not constitute any limitation on the implementation process of the embodiments of the present disclosure.

In the embodiments of the present disclosure, the term "and/or" describes the association relationship of associated objects, indicating that there may be three relationships, for example, A and/or B may indicate: A exists alone, both A and B exist, and B exists alone. The character "/" generally indicates that the associated objects are in an "or" relationship.

In the embodiments of the present disclosure, the term "a plurality of" means two or more, and other quantifiers are similar thereto.

The technical solutions in the embodiments of the present disclosure will be clearly and completely described below with reference to the accompanying drawings in the embodiments of the present disclosure. Obviously, the described embodiments are only a part of the embodiments of the present disclosure, not all of them. All other embodiments obtained by those of ordinary skill in the art based on the embodiments of the present disclosure without creative efforts shall fall within the protection scope of the present disclosure.

The embodiments of the present disclosure provide a frequency hopping information determination method and apparatus, and a terminal, so as to reduce the implementation complexity of the base station.

The method and the apparatus are based on the same application concept. Since the principles of solving problems by the method and the apparatus are similar, the implementation of the apparatus and the method can be referred to each other, and repeated descriptions are omitted.

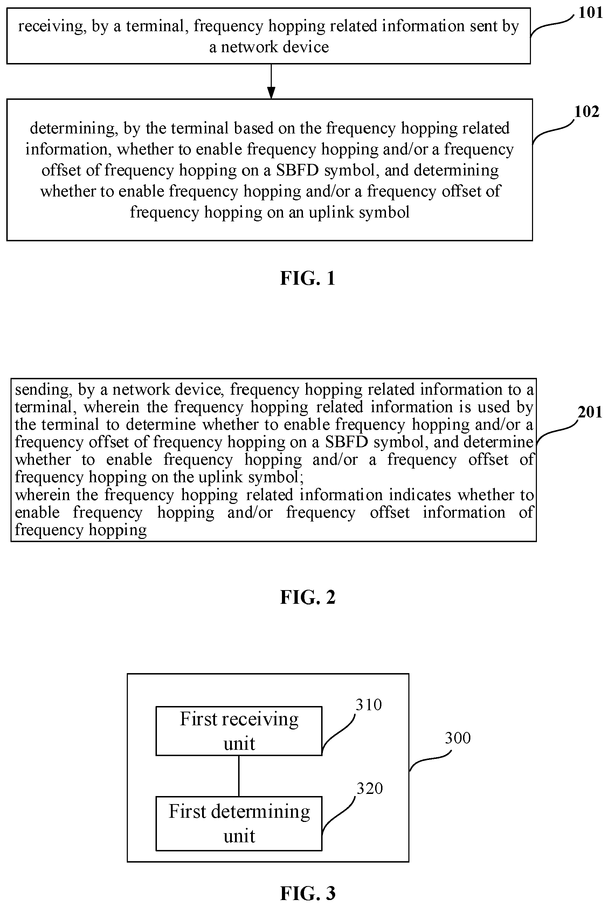

As shown in FIG. 1, an embodiment of the present disclosure provides a frequency hopping information determination method applied to a terminal, which specifically includes the following steps.

Step 101: receiving by the terminal frequency hopping related information sent by a network device.

Step 102: determining by the terminal whether to enable frequency hopping and/or a frequency offset of frequency hopping on a Subband Full Duplex (SBFD) symbol based on the frequency hopping related information, and determining whether to enable frequency hopping and/or the frequency offset of frequency hopping on an uplink symbol; where the frequency hopping related information indicates whether to enable frequency hopping and/or frequency offset information of frequency hopping.

In this embodiment, in the TDD mode, frequency domain resources are divided into multiple non-overlapping subbands, and uplink and downlink frequency domain resources are located in different subbands, referred to as Subband Full Duplex (SBFD). Symbols including uplink subbands and/or downlink subbands are called SBFD symbols. Uplink symbols in the TDD mode that are not configured with downlink subbands may also be called full uplink symbols.

The frequency hopping related information sent by the network device may include indication information of whether to enable frequency hopping and/or frequency offset information of frequency hopping. The terminal determines whether to enable frequency hopping and/or the frequency offset of frequency hopping on the SBFD symbol, and determines whether to enable frequency hopping and/or the frequency offset of frequency hopping on the uplink symbol.

For multi-slot Physical Uplink Shared Channel (PUSCH) transmission, PUSCH repetition transmission, or PUSCH configuration transmission, there may be transmission across SBFD symbols and/or uplink symbols. The terminal can separately determine the frequency hopping indication and/or frequency offset on the SBFD symbol and the frequency hopping indication and/or frequency offset on the uplink symbol based on the frequency hopping indication and/or frequency offset indicated by the network device. The frequency hopping related information can be used to indicate whether to enable frequency hopping. For example: if the frequency hopping related information sent by the network device includes 1, it indicates that frequency hopping is enabled; if the frequency hopping related information sent by the network device includes 0, it indicates that frequency hopping is disabled, vice versa. The specific indication manner is not limited herein.

It should be noted that the SBFD symbol in the embodiments of the present disclosure may also be replaced with an SBFD slot, where the SBFD slot is a slot in which all or part of the symbols are SBFD symbols. The uplink symbol may also be replaced with an uplink slot, that is, the terminal determines whether to enable frequency hopping and/or the frequency offset of frequency hopping on the SBFD slot and whether to enable frequency hopping and/or the frequency offset of frequency hopping on the uplink slot based on the frequency hopping related information indicated by the network device. The embodiments of the present disclosure can be applied to multi-slot PUSCH transmission, PUSCH repetition transmission, PUSCH configuration transmission, etc., and the specific application scenario is not limited.

In the embodiments of the present disclosure, the terminal can determine the frequency hopping parameters of two slot types, namely SBFD slots and uplink slots, based on a set of frequency hopping related information indicated by the network device. Without increasing signaling overhead, the implementation complexity of the network device is reduced, and the flexibility of frequency hopping configuration and frequency hopping gain are improved.

In an optional embodiment, determining by the terminal, based on the frequency hopping related information, whether to enable frequency hopping on the SBFD symbol and whether to enable frequency hopping on the uplink symbol includes at least one of the following:
if the frequency hopping related information indicates that frequency hopping is disabled, disabling frequency hopping on the SBFD symbol and disabling frequency hopping on the uplink symbol;
if the frequency hopping related information indicates that frequency hopping is enabled, enabling frequency hopping on the uplink symbol, and determining whether to enable frequency hopping on the SBFD symbol based on first information.

In this embodiment, the terminal can determine whether to enable frequency hopping on the SBFD symbol based on the frequency hopping related information sent by the network device.

Optionally, the first information includes at least one of the following: frequency domain resource configuration information on the SBFD symbol; for example: the starting Resource Block (RB) and/or a quantity of RBs on the configured SBFD symbol;
frequency domain resource allocation information on the SBFD symbol; for example: the starting RB and/or a quantity of RBs on the allocated SBFD symbol;
uplink subband information; which may include the starting RB of the uplink subband and/or a quantity of RBs occupied by the uplink subband;
frequency offset information of frequency hopping.

In this embodiment, if the frequency hopping related information sent by the network device indicates that frequency hopping is disabled, frequency hopping is disabled on both the uplink symbol and the SBFD symbol; if the frequency hopping related information sent by the network device indicates that frequency hopping is enabled, frequency hopping is enabled on the uplink symbol, and whether to enable frequency hopping on the SBFD symbol is determined based on one or more of the following: frequency domain resource allocation information or configuration information (such as the starting RB and/or a quantity of RBs) on the SBFD symbol, uplink subband information (the starting RB and/or a quantity of RBs), and the frequency offset of frequency hopping.

Optionally, the determining whether to enable frequency hopping on the SBFD symbol based on the first information includes at least one of the following:
Method (1). the first information includes frequency domain resource configuration information on the SBFD symbol and/or frequency domain resource allocation information on the SBFD symbol; if it is determined according to the first information that a quantity of Resource Blocks (RBs) corresponding to the frequency domain resources allocated or configured on the SBFD symbol is greater than or equal to a first value, frequency hopping is disabled on the SBFD symbol; if a quantity of RBs corresponding to the frequency domain resources allocated on the SBFD symbol is less than or equal to the first value, frequency hopping is enabled on the SBFD symbol; if the first value is related to the size of the uplink subband, the first information further includes uplink subband information;
   this embodiment is an embodiment of determining whether to enable frequency hopping on the SBFD symbol based on the frequency domain resource configuration information or allocation information on the SBFD symbol. If a quantity of RBs corresponding to the frequency domain resources allocated or configured on the SBFD symbol is greater than (or greater than or equal to) the first value K1, frequency hopping on the SBFD symbol is disabled; otherwise, frequency hopping on the SBFD symbol is enabled. The first value may be a predefined parameter, for example: the first value is half a quantity of RBs included in the uplink subband, or the first value is a parameter configured by the network device. Optionally, if the first value is related to the size of the uplink subband, the first information further includes uplink subband information. It should be noted that "greater than or equal to" in the embodiments of the present disclosure may include ">" or "≥", and "less than or equal to" may include "<" or "≤". For example: the first value is K1, if a quantity of Resource Blocks (RBs) corresponding to the frequency domain resources allocated or configured on the SBFD symbol is ≥ K1, frequency hopping on the SBFD symbol is disabled; if a quantity of RBs corresponding to the frequency domain resources allocated on the SBFD symbol is < K1, frequency hopping on the SBFD symbol is enabled. Or, if a quantity of Resource Blocks (RBs) corresponding to the frequency domain resources allocated or configured on the SBFD symbol is > K1, frequency hopping on the SBFD symbol is disabled; if a quantity of RBs corresponding to the frequency domain resources allocated on the SBFD symbol is ≤ K1, frequency hopping on the SBFD symbol is enabled.
Method (2). the first information includes frequency domain resource configuration information on the SBFD symbol and/or frequency domain resource allocation information on the SBFD symbol, and uplink subband information; if the frequency domain position of each hop determined according to the starting RB of each of the two hops is within the uplink subband range indicated by the uplink subband information, frequency hopping is enabled on the SBFD symbol; if the frequency domain position determined according to the starting RB of any one of the two hops is outside the uplink subband range, frequency hopping is disabled on the SBFD symbol;
   this embodiment is an embodiment of determining whether to enable frequency hopping on the SBFD symbol based on uplink subband information, frequency domain resource configuration information on the SBFD symbol, and/or frequency domain resource allocation information on the SBFD symbol. If the frequency domain position of each of the two hops determined according to the calculation formula of the starting RB is within the UL subband range, frequency hopping on the SBFD symbol is enabled; otherwise, frequency hopping on the SBFD symbol is disabled.
Method (3). the first information includes frequency domain resource configuration information on the SBFD symbol and/or frequency domain resource allocation information on the SBFD symbol, and frequency offset information of frequency hopping; if the frequency offset between the starting RBs of the two hops is greater than or equal to a second value, frequency hopping is enabled on the SBFD symbol; if the frequency offset between the starting RBs of the two hops is less than or equal to the second value, frequency hopping is disabled on the SBFD symbol;
   this embodiment is an embodiment of determining whether to enable frequency hopping on the SBFD symbol based on frequency offset information of frequency hopping, frequency domain resource configuration information on the SBFD symbol, and/or frequency domain resource allocation information on the SBFD symbol. If the actual frequency offset (offset) between the starting RBs of the two hops determined according to the calculation formula of the starting RB is greater than the second value, frequency hopping on the SBFD symbol is enabled; otherwise, frequency hopping on the SBFD symbol is disabled. The second value may be a predefined parameter, for example: the second value is half a quantity of RBs included in the uplink subband, or the second value is a parameter configured by the network device.
   It should be noted that "greater than or equal to" in the embodiments of the present disclosure may include ">" or "≥", and "less than or equal to" may include "<" or "≤". For example: the second value is a threshold K2, if the frequency offset between the starting RBs of the two hops is ≥ K2, frequency hopping on the SBFD symbol is enabled; if the frequency offset between the starting RBs of the two hops is < K2, frequency hopping on the SBFD symbol is disabled; or, if the frequency offset between the starting RBs of the two hops is > K2, frequency hopping on the SBFD symbol is enabled; if the frequency offset between the starting RBs of the two hops is ≤ K2, frequency hopping on the SBFD symbol is disabled.
Method (4): the first information includes frequency domain resource configuration information on the SBFD symbol and/or frequency domain resource allocation information on the SBFD symbol, uplink subband information, and frequency offset information of frequency hopping; if the frequency domain position of each hop of the two hops determined according to the starting RB of each of the two hops is within the uplink subband range indicated by the uplink subband information, and the frequency offset between the starting RBs of the two hops is greater than or equal to the second value, frequency hopping is enabled on the SBFD symbol; if the frequency domain position determined according to the starting RB of any one of the two hops is outside the uplink subband range indicated by the uplink subband information, and/or the frequency offset between the starting RBs of the two hops is less than or equal to the second value, frequency hopping is disabled on the SBFD symbol.

This embodiment is an embodiment of determining whether to enable frequency hopping on the SBFD symbol based on uplink subband information, frequency offset information of frequency hopping, frequency domain resource configuration information on the SBFD symbol, and/or frequency domain resource allocation information on the SBFD symbol. If both of the following conditions are met, then the frequency hopping on the SBFD symbol is enabled: (1) condition 1: the frequency domain position of each hop determined according to the starting RB of each of the two hops is within the uplink subband range, and (2) condition 2: the frequency offset between the starting RBs of the two hops is greater than or equal to the second value; otherwise, frequency hopping on the SBFD symbol is disabled.

In an optional embodiment, the method further includes:
determining the starting RB position of each hop in the two hops according to the first starting RB position indicated by the frequency domain resource allocation information or the frequency domain resource configuration information on the SBFD symbol and the frequency offset indicated by the frequency offset information of frequency hopping; determining whether the frequency domain position of each hop is within the uplink subband range indicated by the uplink subband information according to the RB length indicated by the frequency domain resource allocation information or the frequency domain resource configuration information on the SBFD symbol and the starting RB position of each hop.

In this embodiment, for the above method (2) or method (4) of determining whether to enable frequency hopping on the SBFD symbol based on the first information, it is first necessary to determine that the frequency domain position of each hop determined according to the starting RB of each of the two hops is within the uplink subband range. Specifically, the starting RB position of each hop can be calculated according to the first starting RB position indicated by the frequency domain resource allocation information or frequency domain resource configuration information on the SBFD symbol.

In an optional embodiment, the method further includes: determining the starting RB position of each hop in the two hops according to the first starting RB position indicated by the frequency domain resource allocation information or the frequency domain resource configuration information on the SBFD symbol and the frequency offset indicated by the frequency offset information of frequency hopping; determining whether the frequency offset between the starting RBs of the two hops is greater than or equal to the second value according to the starting RB position of each hop.

In this embodiment, for the above method (3) or method (4) of determining whether to enable frequency hopping on the SBFD symbol based on the first information, it is first necessary to determine whether the frequency offset between the starting RBs of the two hops is greater than or equal to the second value. Specifically, the starting RB position of each hop can be calculated according to the first starting RB position indicated by the frequency domain resource allocation information or frequency domain resource configuration information on the SBFD symbol, and then the frequency offset between the starting RBs of the two hops can be determined.

Optionally, the determining the starting RB position of each hop in the two hops according to the first starting RB position indicated by the frequency domain resource allocation information or the frequency domain resource configuration information on the SBFD symbol and the frequency offset indicated by the frequency offset information of frequency hopping includes:
determining the starting RB position of each hop in the two hops according to the first starting RB position indicated by the frequency domain resource allocation information or the frequency domain resource configuration information on the SBFD symbol, the frequency offset indicated by the frequency offset information of frequency hopping, and second information;
wherein the second information includes at least one of the following: a quantity of RBs included in a Bandwidth Part (BWP); a quantity of RBs included in the uplink subband; a slot index of a slot where the multi-slot transmission is located; an index of a SBFD symbol within a slot range where the multi-slot transmission is located; an index of an uplink symbol within a slot range where the multi-slot transmission is located; an index of the quantity of repeated transmission times; a relative index of a slot where the multi-slot transmission is located; an index of the SBFD configuration period; an index of the Time Division Duplex (TDD) configuration period.

In this embodiment, the starting RB position of each hop in the two hops can be calculated by the following formula 1 or formula 2: ${RB}_{start} \left({n}_{s}^{μ}\right) = \left\{\begin{matrix}{RB}_{start} & {n}_{s}^{μ} mod 2 = 0 \\ \left({RB}_{start}+{RB}_{offset}\right) {modN}_{BWP}^{size} & {n}_{s}^{μ} mod 2 = 1\end{matrix}\right.$
wherein, ${RB}_{start} \left({n}_{s}^{μ}\right)$ is the calculated starting RB within the slot ${n}_{s}^{μ} , {n}_{s}^{μ}$ represents the current slot index, which is a slot index of a slot where the multi-slot transmission is located; RBₛₜₐᵣₜ is the starting RB in the uplink BWP, RB_{offset} is the frequency offset value between the two hops (in PRB); ${N}_{BWP}^{size}$ represents the size of the uplink BWP (that is, a quantity of RBs included in the BWP). RBₛₜₐᵣₜ and *RB_{offset}* are values indicated in the frequency domain resource allocation information or the frequency domain resource configuration information on the SBFD symbol, and can be determined through the frequency domain resource allocation field in resource allocation type 1. ${RB}_{start} \left({n}_{s}^{μ}\right) = \left\{\begin{matrix}{RB}_{start} & {n}_{s}^{μ} mod 2 = 0 \\ \left({RB}_{start}+{RB}_{offset}\right) {modN}_{UL}^{size} & {n}_{s}^{μ} mod 2 = 1\end{matrix}\right.$
wherein, ${N}_{UL}^{size}$ represents the size of the uplink subband (a quantity of RBs included in the uplink subband).

The starting RB position of each hop can be calculated by using the above formula 1 or formula 2. For formula 1 and formula 2, the frequency domain resource allocation (including the starting RB and a quantity of RBs) on different symbol types can share one piece of frequency domain resource indication information/frequency domain resource configuration information, or can be separately configured or indicated, or separately determined.

The method of determining the frequency domain resource allocation on different symbol types separately includes for example, one piece of frequency domain resource indication information is shared, and the starting RB positions on the full uplink and SBFD symbols are determined according to different interpretation rules. For example: the reference point of the starting position on the full uplink symbol is the starting RB of the uplink BWP, while the reference point of the starting position of the SBFD symbol is the starting RB of the uplink (Uplink, UL) subband.

Optionally, to solve the problem that when an SBFD configuration period includes only one SBFD slot and/or a TDD configuration period includes only one full uplink slot, the actually determined RBIₛₜᵣₐₜ is only one value, that is, frequency hopping cannot be implemented, the ${n}_{s}^{μ}$ in the above formula 1 and formula 2 can be replaced with the relative index within different slot types for this problem. The index is, for example:
1) index is a slot index of a slot where the multi-slot transmission is located;
2) index is an index of a SBFD symbol within a slot range where the multi-slot transmission is located;
3) index is an index of an uplink symbol within a slot range where the multi-slot transmission is located;
4) index is an index of the quantity of repeated transmission times;
5) index is a relative index of a slot where the multi-slot transmission is located, and the index starts from 0;
6) index is an index of the SBFD configuration period;
7) index is an index of the Time Division Duplex (TDD) configuration period.

The following describes an implementation process in which the terminal determines the frequency hopping indication on the SBFD symbol and the frequency hopping indication on the uplink symbol based on the frequency hopping related information indicated by the network device with an example.

The network device sends frequency hopping indication information to a User Equipment (UE) through Radio Resource Control (RRC) signaling, Downlink Control Information (DCI), or Random Access Response (RAR), and the UE receives the frequency hopping indication information sent by the network device. If the frequency hopping indication information sent by the network device does not enable frequency hopping, frequency hopping is disabled on both the full uplink symbol (or referred to as the uplink symbol) and the SBFD symbol; if the frequency hopping indication information sent by the network device enables frequency hopping, frequency hopping is enabled on the full uplink symbol; whether to enable frequency hopping on the SBFD symbol can be determined according to one or more of the following information:
a: frequency domain resource allocation information/configuration information on the SBFD symbol, which may include the starting RB and/or a quantity of RBs;
b: uplink subband information, which may include the starting RB of the uplink subband and/or a quantity of RBs occupied by the uplink subband;
c: the frequency offset of frequency hopping.

The above information can be sent by the network device to the UE through RRC, System Information Block 1 (SIB1), and/or DCI.

Specifically, whether to enable frequency hopping on the SBFD symbol can be determined in any of the following method:
method 1: if a quantity of RBs corresponding to the frequency domain resources allocated on the SBFD symbol is greater than (or ≥) the threshold K1, frequency hopping on the SBFD symbol is disabled; otherwise, frequency hopping on the SBFD symbol is enabled. For example: K1 is half a quantity of RBs corresponding to the uplink subband. When a quantity of RBs corresponding to the frequency domain resource allocation on the SBFD symbol is greater than (or ≥) half a quantity of RBs corresponding to the uplink subband, frequency hopping on the SBFD symbol is disabled; otherwise, frequency hopping on the SBFD symbol is enabled.
method 2: if the frequency domain position determined according to the starting RB calculation formula 1 or formula 2 is within the UL subband range, frequency hopping on the SBFD symbol is enabled; otherwise, frequency hopping on the SBFD symbol is disabled. For example: the UE determines the starting RB position of each hop according to the starting RB position indicated by the resource allocation information and formula 1 or formula 2, and determines whether the frequency domain position of each hop is within the uplink subband range according to the RB length indicated by the resource allocation information. If the frequency domain position of each hop is within the uplink subband range, then frequency hopping on the SBFD symbol is enabled; otherwise, frequency hopping on the SBFD symbol is disabled.
method 3: if the actual frequency offset between the starting RBs of the two hops determined according to the starting RB calculation formula 1 or formula 2 is greater than the threshold K2, then frequency hopping on the SBFD symbol is enabled; otherwise, frequency hopping on the SBFD symbol is disabled. For example: the threshold K2 is half a quantity of RBs corresponding to the uplink subband. The UE determines the starting RB positions of the two hops according to the starting RB position indicated by the resource allocation information and formula 1 or formula 2. If the actual frequency offset between the starting RBs of the two hops is greater than half a quantity of RBs corresponding to the uplink subband, frequency hopping on the SBFD symbol is enabled; otherwise, frequency hopping on the SBFD symbol is disabled.
method 4: if the conditions in the above method 2 and method 3 are both met, then frequency hopping on the SBFD symbol is enabled; otherwise, frequency hopping on the SBFD symbol is disabled.

In this embodiment, the terminal can determine the frequency hopping parameters of two symbol or slot types based on a set of frequency hopping indication information configured by the network device, without increasing signaling overhead, and can reduce the implementation complexity of the network device and improve the flexibility of frequency hopping configuration and frequency hopping gain.

In an optional embodiment, determining by the terminal, based on the frequency hopping related information, the frequency offset of frequency hopping on the SBFD symbol and the frequency offset of frequency hopping on the uplink symbol includes at least one of the following:
determining that the frequency offset on the uplink symbol is the frequency offset of frequency hopping indicated in the frequency hopping related information, and determining the frequency offset on the SBFD symbol according to a first rule;
determining that the frequency offset on the SBFD symbol is the frequency offset of frequency hopping indicated in the frequency hopping related information, and determining the frequency offset on the uplink symbol according to a second rule.

In this embodiment, the terminal can determine the frequency offset on the SBFD symbol and the frequency offset on the uplink symbol based on the frequency hopping related information sent by the network device. If the frequency offset indicated by the network device is applied to the uplink symbol, then the frequency offset on the SBFD symbol is determined based on the first rule. If the frequency offset indicated by the network device is applied to the SBFD symbol, then the frequency offset on the uplink symbol is determined based on the second rule.

Optionally, the first rule includes at least one of the following:
(a) determining the frequency offset on the SBFD symbol based on the frequency offset of frequency hopping, the uplink BWP bandwidth, and the uplink subband bandwidth indicated in the frequency hopping related information; optionally, the frequency offset on the SBFD symbol is determined based on the frequency offset of frequency hopping, the uplink BWP bandwidth, and the uplink subband bandwidth, indicated in the frequency hopping related information;
   the frequency offset on the SBFD symbol is determined by the following formula: $\left⌊\frac{M}{UplinkBWPBandwidth}\right⌋ ∗ UplinkSubbandBandwidth ;$ or $\left⌈\frac{M}{UplinkBWPBandwidth}\right⌉ ∗ UplinkSubbandBandwidth ;$
   where M is the frequency offset of frequency hopping indicated in the frequency hopping related information. The units of the frequency offset M, the uplink BWP bandwidth, and the uplink subband bandwidth are RBs. The uplink BWP is the uplink BWP where the frequency hopping transmission is located or the currently activated UL BWP. The uplink BWP bandwidth represents a quantity of RBs occupied by the uplink BWP, and the uplink subband bandwidth represents a quantity of RBs occupied by the uplink subband. Optionally, the frequency offset on the SBFD symbol can also be expressed as: $\left⌊\frac{M}{UplinkBWPBandwidth}∗UplinkSubbandBandwidth\right⌋$, which represents the downward rounding of the calculation result; or, the frequency offset on the SBFD symbol can also be expressed as: $\left⌈\frac{M}{UplinkBWPBandwidth}∗UplinkSubbandBandwidth\right⌉$ , which represents the upward rounding of the calculation result.
(b) if the activated uplink BWP bandwidth is less than a third value, the frequency offset on the SBFD symbol is the frequency offset corresponding to the first index; if the activated uplink BWP bandwidth is greater than or equal to the third value, the frequency offset on the SBFD symbol is the frequency offset corresponding to the second index; the first index and the second index are related to the index corresponding to the frequency offset of frequency hopping indicated in the frequency hopping related information.

Optionally, the first index is: mod(X+1, 2); the second index is: mod(X+Q, 4); where X is the index corresponding to the frequency offset of frequency hopping indicated in the frequency hopping related information; Q is 1, 2, or 3.

In this embodiment, the third value may be a preset value or a predefined value, for example, 50 RBs. When the frequency offset configured by the network device is applied to the uplink symbol, for an activated uplink BWP (active UL BWP) with a bandwidth less than 50 RBs, the frequency offset value on the SBFD symbol is the value corresponding to the index mod(X+1, 2). For an active BWP with a bandwidth greater than or equal to 50 RBs, the frequency offset value on the SBFD symbol is the value corresponding to the index mod(X+Q, 4), where Q=1, 2, or 3.

In an optional embodiment, the second rule includes at least one of the following:
(a1) determining the frequency offset on the uplink symbol based on the frequency offset of frequency hopping, the uplink BWP bandwidth, and the uplink subband bandwidth indicated in the frequency hopping related information; optionally, the determining the frequency offset on the uplink symbol based on the frequency offset of frequency hopping, the uplink BWP bandwidth, and the uplink subband bandwidth indicated in the frequency hopping related information includes:
determining the frequency offset on the uplink symbol by the following formula: $\left⌊\frac{M}{UplinkBWPBandwidth}\right⌋ ∗ UplinkBWPBandwidth ;$ or $\left⌈\frac{M}{UplinkBWPBandwidth}\right⌉ ∗ UplinkBWPBandwidth ;$
where M is the frequency offset of frequency hopping indicated in the frequency hopping related information. The units of the frequency offset M, the uplink BWP bandwidth, and the uplink subband bandwidth are RBs. The uplink BWP is the uplink BWP where the frequency hopping transmission is located or the currently activated UL BWP. The uplink BWP bandwidth represents a quantity of RBs occupied by the uplink BWP, and the uplink subband bandwidth represents a quantity of RBs occupied by the uplink subband.

Optionally, the frequency offset on the uplink symbol can also be expressed as: $\left⌊\frac{M}{UplinkBWPBandwidth}∗UplinkBWPBandwidth\right⌋$*,* which represents the downward rounding of the calculation result; or, the frequency offset on the uplink symbol can also be expressed as: $\left⌈\frac{M}{UplinkBWPBandwidth}∗UplinkBWPBandwidth\right⌉$, which represents the upward rounding of the calculation result.
(b1) if the activated uplink BWP bandwidth is less than the third value, the frequency offset on the uplink symbol is the frequency offset corresponding to the first index; if the activated uplink BWP bandwidth is greater than or equal to the third value, the frequency offset on the uplink symbol is the frequency offset corresponding to the second index; the first index and the second index are related to the index corresponding to the frequency offset of frequency hopping indicated in the frequency hopping related information.

Optionally, the first index is: mod(X+1, 2); the second index is: mod(X+Q, 4); where X is the index corresponding to the frequency offset of frequency hopping indicated in the frequency hopping related information; Q is 1, 2, or 3.

In this embodiment, the third value may be a preset value or a predefined value, for example, 50 RBs. When the frequency offset of frequency hopping indicated by the network device is applied to the SBFD symbol, for an activated uplink BWP (active UL BWP) with a bandwidth less than 50 RBs, the frequency offset value on the uplink symbol is the value corresponding to the index mod(X+1, 2). For an active BWP with a bandwidth greater than or equal to 50 RBs, the frequency offset value on the uplink symbol is the value corresponding to the index mod(X+Q, 4), where Q=1, 2, or 3.

The following describes an implementation process in which the terminal determines the frequency offset of frequency hopping on the SBFD symbol and the frequency offset of frequency hopping on the uplink symbol according to the frequency hopping related information indicated by the network device with examples.

The network device and the UE determine the frequency offset for frequency hopping in a predefined manner; or, the network device sends frequency offset information for frequency hopping to the UE through RRC signaling or DCI. The UE receives the frequency offset information and determines the frequency domain offset on the SBFD symbol and the frequency domain offset on the uplink symbol according to the frequency offset information. Determining by the terminal the frequency domain offset based on the frequency offset information configured by the network device further includes: determining a frequency offset set based on RRC signaling, determining an index in the frequency offset set based on the frequency offset information, and determining the frequency offset based on the frequency offset set and the index.

The UE determines the frequency offset on the SBFD symbol and the uplink symbol based on the frequency offset configured by the network device, and the specific method may be any of the following:

Method a: the frequency offset M configured by the network device is applied to the full uplink symbol, and the frequency offset of the SBFD symbol is $\left⌊\frac{M}{UplinkBWPBandwidth}∗UplinkSubbandBandwidth\right⌋$ or $\left⌈\frac{M}{UplinkBWPBandwidth}∗UplinkSubbandBandwidth\right⌉$ ; or, the frequency offset value M configured by the network device is applied to the SBFD symbol, and the frequency offset on the full uplink symbol is $\left⌊\frac{M}{UplinkBWPBandwidth}∗UplinkBWPBandwidth\right⌋$ or $\left⌈\frac{M}{UplinkBWPBandwidth}∗UplinkBWPBandwidth\right⌉$. The units of the frequency offset M, the uplink BWP bandwidth, and the uplink subband bandwidth are RBs. The uplink BWP is the uplink BWP where the frequency hopping transmission is located or the currently activated UL BWP.

For example: the frequency offset M configured by the network device is 20 RBs, the UL BWP bandwidth is 200 RBs, and the UL subband bandwidth is 50 RBs. According to the above method, the frequency offset on the full uplink symbol is 20 RBs, and the frequency offset of the SBFD symbol is $\left⌊20/200∗50\right⌋ = 5 RBs$; or, the frequency offset of the SBFD symbol is 20 RBs, and the frequency offset on the full uplink symbol is $\left⌊20/50∗200\right⌋ = 80 RBs$. RBs.
Method b: the frequency offset value M configured by the network device is applied to the full uplink symbol (or SBFD symbol). For an active UL BWP with a bandwidth less than 50 RBs, the frequency offset value on the SBFD symbol (or full uplink symbol) is the value corresponding to the index mod(X+1, 2), where X is the index corresponding to the frequency offset value M indicated by DCI; for an active BWP with a bandwidth greater than or equal to 50 RBs, the frequency offset value on the SBFD symbol (or full uplink symbol) is the value corresponding to the index mod(X+Q, 4), where Q=1, 2, or 3, and X is the index corresponding to the frequency offset M indicated by DCI.

For example: the frequency offset value M configured by the network device is applied to the full uplink symbol. When the active UL BWP bandwidth is less than 50 RBs, the index corresponding to the frequency offset value M is 0, and the frequency offset value on the SBFD symbol is the frequency offset value corresponding to the index mod(X+1, 2)=mod(0+1, 2)=1.

For example: the frequency offset value M configured by the network device is applied to the SBFD symbol. When the active UL BWP bandwidth is less than 50 RBs, the index corresponding to the frequency offset value M is 1, and the frequency offset value on the full uplink symbol is the frequency offset value corresponding to the index mod(X+1, 2)=mod(1+1, 2)=0.

For example: the frequency offset value M configured by the network device is applied to the full uplink symbol. When the active UL BWP bandwidth is greater than 50 RBs, the index corresponding to the frequency offset value M is 0, and Q=2, the frequency offset value on the SBFD symbol is the frequency offset value corresponding to the index mod(index+2, 4)=mod(0+2, 4)=2.

For example: the frequency offset value M configured by the network device is applied to the SBFD symbol. When the active UL BWP bandwidth is greater than 50 RBs, the index corresponding to the frequency offset value M is 1, and Q=3, the frequency offset value on the full uplink symbol is the frequency offset value corresponding to the index mod(index+3, 4)=mod(1+3, 4)=0.

In this embodiment, the terminal can determine the frequency offset parameters of two symbol types or two slot types based on a set of frequency offset information configured by the network device, without increasing signaling overhead, and can reduce the implementation complexity of the network device and improve the flexibility of frequency hopping configuration and frequency hopping gain.

In an optional embodiment, the receiving the frequency hopping related information sent by the network device includes:
receiving Downlink Control Information (DCI) scheduling a Physical Uplink Shared Channel (PUSCH), where the DCI carries the frequency hopping related information; the frequency hopping related information includes frequency offset information of frequency hopping;
the method further includes: determining the length of a first field in the DCI based on the bandwidth of the activated uplink BWP and/or the bandwidth of the uplink subband, where the first field is used to indicate the frequency offset information of frequency hopping.

In this embodiment, the network device can send frequency hopping related information to the terminal through RRC signaling, DCI, or RAR. When the network device sends the frequency hopping related information through DCI, for the DCI scheduling the PUSCH, the DCI scheduling the PUSCH is used to schedule a UE supporting SBFD. The DCI includes a first field for indicating frequency offset information, and the length of the first field can be determined based on the bandwidth of the activated uplink BWP or the width of the uplink subband.

Optionally, the determining the length of the first field in the DCI based on the bandwidth of the activated uplink BWP and/or the bandwidth of the uplink subband includes:
if the PUSCH scheduled by the DCI is within the uplink subband range, and the bandwidth of the activated uplink BWP or the bandwidth of the uplink subband is less than a fourth value, the length of the first field is 1 bit;
if the PUSCH scheduled by the DCI is within the uplink subband range, and the bandwidth of the activated uplink BWP or the bandwidth of the uplink subband is greater than or equal to the fourth value, the length of the first field is 2 bits.

In this embodiment, the fourth value may be a preset value or a predefined value, for example, 50 RBs. If the uplink resource scheduled by the DCI is within the UL subband range, the length of the first field may be determined based on the activated uplink BWP or the uplink subband. Taking the fourth value as 50 RBs as an example, when the width of the uplink active BWP is less than 50 RBs, the length of the first field is set to 1 bit, indicating one of the two frequency offsets configured by the higher layer. When the width of the uplink active BWP is greater than or equal to 50 RBs, the length of the first field is set to 2 bits, and the frequency offset is indicated by the high bit or the low bit in the 2 bits.

Optionally, the DCI further includes a second field, and the second field is used to indicate whether the PUSCH scheduled by the DCI is located within the uplink subband range or within the activated uplink BWP range.

In this embodiment, the network device may further indicate, through the second field in the DCI, whether the uplink resource scheduled by the current DCI is within the UL subband range or within the range of the UL active BWP.

The following describes a method for determining the length of the field indicating frequency offset information with examples.

For the DCI scheduling the PUSCH, the DCI scheduling the PUSCH is used to schedule a UE supporting SBFD, and the length of the first field used to indicate the frequency offset of frequency hopping in the DCI is determined based on the bandwidth of the uplink active BWP.

Optionally, regardless of whether the PUSCH scheduled by the DCI is within the UL subband range or within the uplink active BWP range, the length of the first field is determined based on the activated uplink BWP.

Specifically: when the width of the activated uplink BWP is less than 50 RBs, the length of the first field is 1 bit, indicating one of the two frequency offsets configured by the higher layer; when the bandwidth of the activated uplink BWP is greater than or equal to 50 RBs, the length of the first field is 2 bits, indicating one of the four frequency offsets configured by the higher layer.

Optionally, when the PUSCH scheduled by the DCI is within the UL subband range, the length of the first field is determined based on the activated uplink BWP. For example: when the bandwidth of the activated uplink BWP is greater than or equal to 50 RBs and the bandwidth of the UL subband is less than 50 RBs, the length of the first field is 2 bits.

Optionally, for the DCI scheduling the PUSCH, the DCI scheduling the PUSCH is used to schedule a UE supporting SBFD, and when the PUSCH scheduled by the DCI is within the UL subband range, the length of the frequency offset indication field of frequency hopping in the DCI is determined based on the bandwidth of the uplink subband.

For example: when the width of the uplink subband is less than 50 RBs, the length of the first field is 1 bit, indicating one of the two frequency offsets configured by the higher layer; when the bandwidth of the uplink subband is greater than or equal to 50 RBs, the length of the first field is 2 bits, indicating one of the four frequency offsets configured by the higher layer.

Optionally, the network device may indicate, through the indication field in the DCI, whether the uplink resource scheduled by the current DCI is within the UL subband range or within the range of the UL active BWP.

In this embodiment, the terminal determines the length of the field used to indicate the frequency offset based on the bandwidth of the BWP and/or the bandwidth of the uplink subband.

In the embodiments of the present disclosure, the terminal can determine the frequency hopping parameters of two slot types, namely SBFD slots and uplink slots, based on a set of frequency hopping related information indicated by the network device. Without increasing signaling overhead, the implementation complexity of the network device is reduced, and the flexibility of frequency hopping configuration and frequency hopping gain are improved.

As shown in FIG. 2, an embodiment of the present disclosure further provides a frequency hopping information determination method applied to a network device, including following steps.

Step 201: sending by the network device frequency hopping related information to a terminal, where the frequency hopping related information is used by the terminal to determine whether to enable frequency hopping and/or the frequency offset of frequency hopping on the SBFD symbol, and determine whether to enable frequency hopping and/or the frequency offset of frequency hopping on the uplink symbol; wherein the frequency hopping related information indicates whether to enable frequency hopping and/or frequency offset information of frequency hopping.

The frequency hopping related information sent by the network device may include indication information of whether to enable frequency hopping and/or frequency offset information of frequency hopping. The terminal determines whether to enable frequency hopping and/or the frequency offset of frequency hopping on the SBFD symbol, and determines whether to enable frequency hopping and/or the frequency offset of frequency hopping on the uplink symbol.

The frequency hopping related information may be used to indicate whether to enable frequency hopping. For example: if the frequency hopping related information includes 1, it indicates that frequency hopping is enabled; if the frequency hopping related information includes 0, it indicates that frequency hopping is disabled, vice versa. The specific indication manner is not limited herein.

It should be noted that the SBFD symbol in the embodiments of the present disclosure may also be replaced with an SBFD slot, where the SBFD slot is a slot in which all or part of the symbols are SBFD symbols. The uplink symbol may also be replaced with an uplink slot, that is, the network device determines the frequency hopping related information on the SBFD slot and the frequency hopping related information on the uplink slot. The embodiments of the present disclosure can be applied to multi-slot PUSCH transmission, PUSCH repetition transmission, PUSCH configuration transmission, etc., and the specific application scenario is not limited.

As an optional embodiment, the sending frequency hopping related information to the terminal includes: sending DCI scheduling the PUSCH to the terminal, where the DCI carries the frequency hopping related information; the frequency hopping related information includes frequency offset information of frequency hopping;

the method further includes: determining the length of the first field in the DCI based on the bandwidth of the activated uplink BWP and/or the bandwidth of the uplink subband, where the first field is used to indicate the frequency offset information of frequency hopping.

In this embodiment, the network device can send frequency hopping related information to the terminal through RRC signaling, DCI, or RAR. When the network device sends the frequency hopping related information through DCI, for the DCI scheduling the PUSCH, the DCI scheduling the PUSCH is used to schedule a UE supporting SBFD. The DCI includes a first field for indicating frequency offset information, and the length of the first field can be determined based on the bandwidth of the activated uplink BWP or the width of the uplink subband.

Optionally, the determining the length of the first field in the DCI based on the bandwidth of the activated uplink BWP and/or the bandwidth of the uplink subband includes:
if the PUSCH scheduled by the DCI is within the uplink subband range, and the bandwidth of the activated uplink BWP or the bandwidth of the uplink subband is less than a fourth value, the length of the first field is 1 bit;
if the PUSCH scheduled by the DCI is within the uplink subband range, and the bandwidth of the activated uplink BWP or the bandwidth of the uplink subband is greater than or equal to the fourth value, the length of the first field is 2 bits.

In this embodiment, the fourth value may be a preset value or a predefined value, for example, 50 RBs. If the PUSCH scheduled by the DCI is within the UL subband range, the length of the first field may be determined based on the activated uplink BWP or the uplink subband. Taking the fourth value as 50 RBs as an example, when the width of the uplink active BWP is less than 50 RBs, the length of the first field is set to 1 bit, indicating one of the two frequency offsets configured by the higher layer. When the width of the uplink active BWP is greater than or equal to 50 RBs, the length of the first field is set to 2 bits, and the frequency offset is indicated by the high bit or the low bit in the 2 bits.

Optionally, the DCI further includes a second field, and the second field is used to indicate whether the PUSCH scheduled by the DCI is located within the uplink subband range or within the activated uplink BWP range.

In this embodiment, the network device may further indicate, through the second field in the DCI, whether the uplink resource scheduled by the current DCI is within the UL subband range or within the range of the UL active BWP.

In the embodiments of the present disclosure, the network device can indicate frequency hopping related information to the terminal, so that the terminal can determine the frequency hopping parameters of two slot types, namely SBFD slots and uplink slots, based on a set of frequency hopping related information indicated by the network device. Without increasing signaling overhead, the implementation complexity of the network device is reduced, and the flexibility of frequency hopping configuration and frequency hopping gain are improved. The specific implementation method for the terminal to determine the frequency hopping related information on the SBFD symbol and the frequency hopping related information on the uplink symbol will not be repeated here.

The foregoing embodiments describe the frequency hopping information determination method of the present disclosure, and the following embodiments further describe the corresponding apparatus with reference to the accompanying drawings.

Specifically, as shown in FIG. 3, an embodiment of the present disclosure provides a frequency hopping information determination apparatus 300 applied to a terminal, including:
a first receiving unit 310, configured to receive frequency hopping related information sent by a network device;
a first determining unit 320, configured to determine whether to enable frequency hopping and/or the frequency offset of frequency hopping on a Subband Full Duplex (SBFD) symbol according to the frequency hopping related information, and determine whether to enable frequency hopping and/or the frequency offset of frequency hopping on an uplink symbol;
wherein the frequency hopping related information indicates whether to enable frequency hopping and/or frequency offset information of frequency hopping.

Optionally, the first determining unit is specifically configured to perform at least one of the following:
if the frequency hopping related information indicates that frequency hopping is disabled, frequency hopping is disabled on the SBFD symbol and frequency hopping is disabled on the uplink symbol;
if the frequency hopping related information indicates that frequency hopping is enabled, frequency hopping is enabled on the uplink symbol, and whether to enable frequency hopping on the SBFD symbol is determined based on first information.

Optionally, the first determining unit is specifically configured to perform at least one of the following:
the first information includes frequency domain resource configuration information on the SBFD symbol and/or frequency domain resource allocation information on the SBFD symbol; if it is determined according to the first information that a quantity of Resource Blocks (RBs) corresponding to the frequency domain resources allocated or configured on the SBFD symbol is greater than or equal to a first value, frequency hopping is disabled on the SBFD symbol; if a quantity of RBs corresponding to the frequency domain resources allocated on the SBFD symbol is less than or equal to the first value, frequency hopping is enabled on the SBFD symbol; if the first value is related to the size of the uplink subband, the first information further includes uplink subband information;
the first information includes frequency domain resource configuration information on the SBFD symbol and/or frequency domain resource allocation information on the SBFD symbol, and uplink subband information; if the frequency domain position of each hop determined according to the starting RB of each of the two hops is within the uplink subband range indicated by the uplink subband information, frequency hopping is enabled on the SBFD symbol; if the frequency domain position determined according to the starting RB of any one of the two hops is outside the uplink subband range, frequency hopping is disabled on the SBFD symbol;
the first information includes frequency domain resource configuration information on the SBFD symbol and/or frequency domain resource allocation information on the SBFD symbol, and frequency offset information of frequency hopping; if the frequency offset between the starting RBs of the two hops is greater than or equal to a second value, frequency hopping is enabled on the SBFD symbol; if the frequency offset between the starting RBs of the two hops is less than or equal to the second value, frequency hopping is disabled on the SBFD symbol;
the first information includes frequency domain resource configuration information on the SBFD symbol and/or frequency domain resource allocation information on the SBFD symbol, uplink subband information, and frequency offset information of frequency hopping; if the frequency domain position of each hop determined according to the starting RB of each of the two hops is within the uplink subband range indicated by the uplink subband information, and the frequency offset between the starting RBs of the two hops is greater than or equal to the second value, frequency hopping is enabled on the SBFD symbol; if the frequency domain position determined according to the starting RB of any one of the two hops is outside the uplink subband range indicated by the uplink subband information, and/or the frequency offset between the starting RBs of the two hops is less than or equal to the second value, frequency hopping is disabled on the SBFD symbol.

Optionally, the apparatus further includes:
a second determining unit, configured to determine the starting RB position of each hop in the two hops according to the first starting RB position indicated by the frequency domain resource allocation information or the frequency domain resource configuration information on the SBFD symbol and the frequency offset indicated by the frequency offset information of frequency hopping;
a third determining unit, configured to determine whether the frequency domain position of each hop is within the uplink subband range indicated by the uplink subband information according to the RB length indicated by the frequency domain resource allocation information or the frequency domain resource configuration information on the SBFD symbol and the starting RB position of each hop.

Optionally, the apparatus further includes:
a fourth determining unit, configured to determine the starting RB position of each hop in the two hops according to the first starting RB position indicated by the frequency domain resource allocation information or the frequency domain resource configuration information on the SBFD symbol and the frequency offset indicated by the frequency offset information of frequency hopping;
a fifth determining unit, configured to determine whether the frequency offset between the starting RBs of the two hops is greater than or equal to the second value according to the starting RB position of each hop.

Optionally, the second determining unit or the fourth determining unit is specifically configured to: determine the starting RB position of each hop in the two hops according to the first starting RB position indicated by the frequency domain resource allocation information or the frequency domain resource configuration information on the SBFD symbol, the frequency offset indicated by the frequency offset information of frequency hopping, and second information;
wherein the second information includes at least one of the following:
a quantity of RBs included in a Bandwidth Part (BWP);
a quantity of RBs included in the uplink subband;
a slot index of a slot where the multi-slot transmission is located;
an index of a SBFD symbol within a slot range where the multi-slot transmission is located;
an index of an uplink symbol within a slot range where the multi-slot transmission is located;
an index of the quantity of repeated transmission times;
a relative index of a slot where the multi-slot transmission is located;
an index of the SBFD configuration period;
an index of the Time Division Duplex (TDD) configuration period.

Optionally, the first determining unit is specifically configured to perform at least one of the following:
determining that the frequency offset on the uplink symbol is the frequency offset of frequency hopping indicated in the frequency hopping related information, and determining the frequency offset on the SBFD symbol according to a first rule;
determining that the frequency offset on the SBFD symbol is the frequency offset of frequency hopping indicated in the frequency hopping related information, and determining the frequency offset on the uplink symbol according to a second rule.

Optionally, the first rule includes at least one of the following:
determining the frequency offset on the SBFD symbol based on the frequency offset of frequency hopping indicated in the frequency hopping related information, the uplink BWP bandwidth, and the uplink subband bandwidth;
if the activated uplink BWP bandwidth is less than a third value, the frequency offset on the SBFD symbol is the frequency offset corresponding to a first index; if the activated uplink BWP bandwidth is greater than or equal to the third value, the frequency offset on the SBFD symbol is the frequency offset corresponding to a second index; the first index and the second index are related to the index corresponding to the frequency offset of frequency hopping indicated in the frequency hopping related information.

Optionally, the second rule includes at least one of the following:
determining the frequency offset on the uplink symbol based on the frequency offset of frequency hopping indicated in the frequency hopping related information, the uplink BWP bandwidth, and the uplink subband bandwidth;
if the activated uplink BWP bandwidth is less than the third value, the frequency offset on the uplink symbol is the frequency offset corresponding to the first index; if the activated uplink BWP bandwidth is greater than or equal to the third value, the frequency offset on the uplink symbol is the frequency offset corresponding to the second index; the first index and the second index are related to the index corresponding to the frequency offset of frequency hopping indicated in the frequency hopping related information.

Optionally, the first rule is specifically configured to: determine the frequency offset on the SBFD symbol by the following formula: $\left⌊\frac{M}{UplinkBWPBandwidth}\right⌋ ∗ UplinkSubbandBandwidth ;$ or $\left⌈\frac{M}{UplinkBWPBandwidth}\right⌉ ∗ UplinkSubbandBandwidth ;$ where M is the frequency offset of frequency hopping indicated in the frequency hopping related information; the uplink BWP bandwidth represents a quantity of RBs occupied by the uplink BWP, and the uplink subband bandwidth represents a quantity of RBs occupied by the uplink subband.

Optionally, the second rule is specifically configured to: determine the frequency offset on the uplink symbol by the following formula: $\left⌊\frac{M}{UplinkBWPBandwidth}\right⌋ ∗ UplinkBWPBandwidth ;$ or $\left⌈\frac{M}{UplinkBWPBandwidth}\right⌉ ∗ UplinkBWPBandwidth ;$ where M is the frequency offset of frequency hopping indicated in the frequency hopping related information; the uplink BWP bandwidth represents a quantity of RBs occupied by the uplink BWP, and the uplink subband bandwidth represents a quantity of RBs occupied by the uplink subband.

Optionally, the first index is: mod(X+1, 2); the second index is: mod(X+Q, 4); where X is the index corresponding to the frequency offset of frequency hopping indicated in the frequency hopping related information; Q is 1, 2, or 3.

Optionally, the first receiving unit is specifically configured to: receive Downlink Control Information (DCI) scheduling a Physical Uplink Shared Channel (PUSCH), where the DCI carries the frequency hopping related information; the frequency hopping related information includes frequency offset information of frequency hopping;
the apparatus further includes: a sixth determining unit, configured to determine the length of the first field in the DCI based on the bandwidth of the activated uplink BWP and/or the bandwidth of the uplink subband, where the first field is used to indicate the frequency offset information of frequency hopping.

Optionally, the sixth determining unit is specifically configured to: if the PUSCH scheduled by the DCI is within the uplink subband range, and the bandwidth of the activated uplink BWP or the bandwidth of the uplink subband is less than a fourth value, the length of the first field is 1 bit;
if the PUSCH scheduled by the DCI is within the uplink subband range, and the bandwidth of the activated uplink BWP or the bandwidth of the uplink subband is greater than or equal to the fourth value, the length of the first field is 2 bits.

Optionally, the DCI further includes a second field, and the second field is used to indicate whether the PUSCH scheduled by the DCI is located within the uplink subband range or within the activated uplink BWP range.

It should be noted that the apparatus provided in the embodiments of the present disclosure can implement all the method steps implemented by the method embodiment applied to the terminal and achieve the same technical effect, which will not be described in detail in this embodiment.

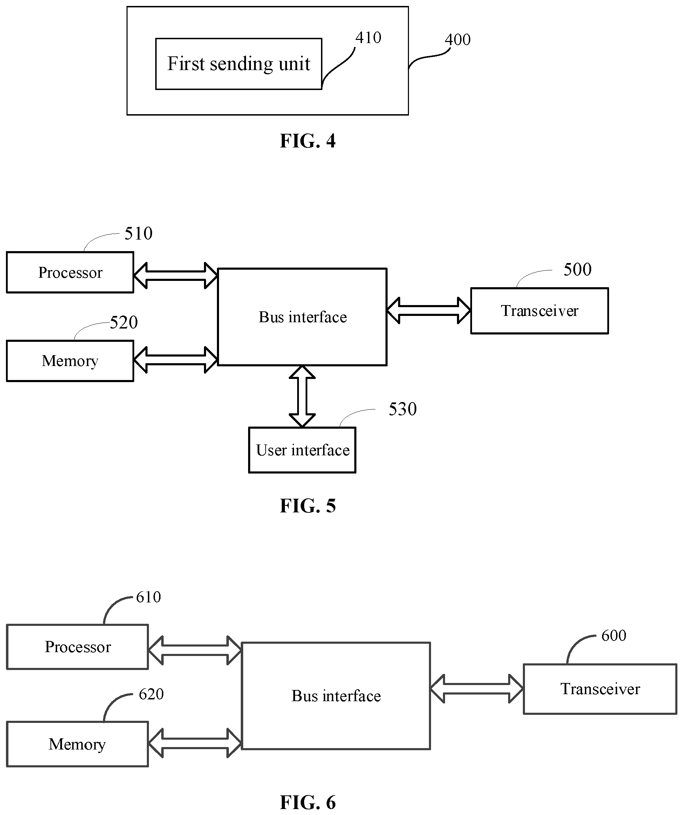

Specifically, as shown in FIG. 4, an embodiment of the present disclosure provides a frequency hopping information determination apparatus 400 applied to a network device, including:
a first sending unit 410, configured to send frequency hopping related information to a terminal, where the frequency hopping related information is used by the terminal to determine whether to enable frequency hopping and/or the frequency offset of frequency hopping on the SBFD symbol, and determine whether to enable frequency hopping and/or the frequency offset of frequency hopping on the uplink symbol;
wherein the frequency hopping related information indicates whether to enable frequency hopping and/or frequency offset information of frequency hopping.

It should be noted that the apparatus provided in the embodiments of the present disclosure can implement all the method steps implemented by the method embodiment applied to the network device and achieve the same technical effect, which will not be described in detail in this embodiment.

It should be noted that the division of units in the embodiments of the present disclosure is schematic and only for logical function division, and there may be other division manners in actual implementation. In addition, functional units in the embodiments of the present disclosure may be integrated into one processing unit, or each unit may exist physically separately, or two or more units may be integrated into one unit. The integrated unit may be implemented in the form of hardware or a software functional unit.

When the integrated unit is implemented in the form of a software functional unit and sold or used as an independent product, it may be stored in a processor-readable storage medium. Based on this understanding, the technical solution of the present disclosure essentially or the part contributing to the related art may be embodied in the form of a software product. The computer software product is stored in a storage medium and includes several instructions for enabling a computer device (which may be a personal computer, a server, a network device, etc.) or a processor to execute all or part of the steps of the method described in the embodiments of the present disclosure. The aforementioned storage medium includes various media that can store program codes, such as a USB flash drive, a removable hard disk, a Read-Only Memory (ROM), a Random Access Memory (RAM), a magnetic disk, or an optical disk.

As shown in FIG. 5, an embodiment of the present disclosure further provides a terminal, including: a memory 520, a transceiver 500, and a processor 510; wherein the memory 520 is configured to store a computer program; the transceiver 500 is configured to receive and send data under the control of the processor 510; the processor 510 is configured to read the computer program in the memory and perform the following operations:
receiving frequency hopping related information sent by a network device;
determining whether to enable frequency hopping and/or the frequency offset of frequency hopping on a Subband Full Duplex (SBFD) symbol according to the frequency hopping related information, and determining whether to enable frequency hopping and/or the frequency offset of frequency hopping on an uplink symbol;
wherein the frequency hopping related information indicates whether to enable frequency hopping and/or frequency offset information of frequency hopping.

Optionally, the processor is configured to read the computer program in the memory and perform at least one of the following operations:
if the frequency hopping related information indicates that frequency hopping is disabled, frequency hopping is disabled on the SBFD symbol and frequency hopping is disabled on the uplink symbol;
if the frequency hopping related information indicates that frequency hopping is enabled, frequency hopping is enabled on the uplink symbol, and whether to enable frequency hopping on the SBFD symbol is determined based on first information.

Optionally, the processor is configured to read the computer program in the memory and perform at least one of the following operations:
the first information includes frequency domain resource configuration information on the SBFD symbol and/or frequency domain resource allocation information on the SBFD symbol; if it is determined according to the first information that a quantity of Resource Blocks (RBs) corresponding to the frequency domain resources allocated or configured on the SBFD symbol is greater than or equal to a first value, frequency hopping is disabled on the SBFD symbol; if a quantity of RBs corresponding to the frequency domain resources allocated on the SBFD symbol is less than or equal to the first value, frequency hopping is enabled on the SBFD symbol; if the first value is related to the size of the uplink subband, the first information further includes uplink subband information;
the first information includes frequency domain resource configuration information on the SBFD symbol and/or frequency domain resource allocation information on the SBFD symbol, and uplink subband information; if the frequency domain position of each hop determined according to the starting RB of each of the two hops is within the uplink subband range indicated by the uplink subband information, frequency hopping is enabled on the SBFD symbol; if the frequency domain position determined according to the starting RB of any one of the two hops is outside the uplink subband range, frequency hopping is disabled on the SBFD symbol;
the first information includes frequency domain resource configuration information on the SBFD symbol and/or frequency domain resource allocation information on the SBFD symbol, and frequency offset information of frequency hopping; if the frequency offset between the starting RBs of the two hops is greater than or equal to a second value, frequency hopping is enabled on the SBFD symbol; if the frequency offset between the starting RBs of the two hops is less than or equal to the second value, frequency hopping is disabled on the SBFD symbol;
the first information includes frequency domain resource configuration information on the SBFD symbol and/or frequency domain resource allocation information on the SBFD symbol, uplink subband information, and frequency offset information of frequency hopping; if the frequency domain position of each hop determined according to the starting RB of each of the two hops is within the uplink subband range indicated by the uplink subband information, and the frequency offset between the starting RBs of the two hops is greater than or equal to the second value, frequency hopping is enabled on the SBFD symbol; if the frequency domain position determined according to the starting RB of any one of the two hops is outside the uplink subband range indicated by the uplink subband information, and/or the frequency offset between the starting RBs of the two hops is less than or equal to the second value, frequency hopping is disabled on the SBFD symbol.

Optionally, the processor is configured to read the computer program in the memory and perform the following operations:
determining the starting RB position of each hop in the two hops according to the first starting RB position indicated by the frequency domain resource allocation information or the frequency domain resource configuration information on the SBFD symbol and the frequency offset indicated by the frequency offset information of frequency hopping; determining whether the frequency domain position of each hop is within the uplink subband range indicated by the uplink subband information according to the RB length indicated by the frequency domain resource allocation information or the frequency domain resource configuration information on the SBFD symbol and the starting RB position of each hop.

Optionally, the processor is configured to read the computer program in the memory and perform the following operations:
determining the starting RB position of each hop in the two hops according to the first starting RB position indicated by the frequency domain resource allocation information or the frequency domain resource configuration information on the SBFD symbol and the frequency offset indicated by the frequency offset information of frequency hopping; determining whether the frequency offset between the starting RBs of the two hops is greater than or equal to the second value according to the starting RB position of each hop.

Optionally, the processor is configured to read the computer program in the memory and perform the following operations:
determining the starting RB position of each hop in the two hops according to the first starting RB position indicated by the frequency domain resource allocation information or the frequency domain resource configuration information on the SBFD symbol, the frequency offset indicated by the frequency offset information of frequency hopping, and second information;
wherein the second information includes at least one of the following:
   a quantity of RBs included in a Bandwidth Part (BWP);
   a quantity of RBs included in the uplink subband;
   a slot index of a slot where the multi-slot transmission is located;
   an index of a SBFD symbol within a slot range where the multi-slot transmission is located;
   an index of an uplink symbol within a slot range where the multi-slot transmission is located;
   an index of the quantity of repeated transmission times;
   a relative index of a slot where the multi-slot transmission is located;
   an index of the SBFD configuration period;
   an index of the Time Division Duplex (TDD) configuration period.

Optionally, the processor is configured to read the computer program in the memory and perform at least one of the following operations:
determining that the frequency offset on the uplink symbol is the frequency offset of frequency hopping indicated in the frequency hopping related information, and determining the frequency offset on the SBFD symbol according to a first rule;
determining that the frequency offset on the SBFD symbol is the frequency offset of frequency hopping indicated in the frequency hopping related information, and determining the frequency offset on the uplink symbol according to a second rule.

Optionally, the first rule includes at least one of the following:
determining the frequency offset on the SBFD symbol based on the frequency offset of frequency hopping indicated in the frequency hopping related information, the uplink BWP bandwidth, and the uplink subband bandwidth;
if the activated uplink BWP bandwidth is less than a third value, the frequency offset on the SBFD symbol is the frequency offset corresponding to a first index; if the activated uplink BWP bandwidth is greater than or equal to the third value, the frequency offset on the SBFD symbol is the frequency offset corresponding to a second index; the first index and the second index are related to the index corresponding to the frequency offset of frequency hopping indicated in the frequency hopping related information.

Optionally, the second rule includes at least one of the following:
determining the frequency offset on the uplink symbol based on the frequency offset of frequency hopping indicated in the frequency hopping related information, the uplink BWP bandwidth, and the uplink subband bandwidth;
if the activated uplink BWP bandwidth is less than the third value, the frequency offset on the uplink symbol is the frequency offset corresponding to the first index; if the activated uplink BWP bandwidth is greater than or equal to the third value, the frequency offset on the uplink symbol is the frequency offset corresponding to the second index; the first index and the second index are related to the index corresponding to the frequency offset of frequency hopping indicated in the frequency hopping related information.

Optionally, the processor is configured to read the computer program in the memory and perform the following operations:
determining the frequency offset on the SBFD symbol by the following formula: $\left⌊\frac{M}{UplinkBWPBandwidth}\right⌋ ∗ UplinkSubbandBandwidth ;$ or $\left⌈\frac{M}{UplinkBWPBandwidth}\right⌉ ∗ UplinkSubbandBandwidth ;$
where M is the frequency offset of frequency hopping indicated in the frequency hopping related information; the uplink BWP bandwidth represents a quantity of RBs occupied by the uplink BWP, and the uplink subband bandwidth represents a quantity of RBs occupied by the uplink subband.

Optionally, the processor is configured to read the computer program in the memory and perform the following operations:
determining the frequency offset on the uplink symbol by the following formula: $\left⌊\frac{M}{UplinkBWPBandwidth}\right⌋ ∗ UplinkBWPBandwidth ;$ or $\left⌈\frac{M}{UplinkBWPBandwidth}\right⌉ ∗ UplinkBWPBandwidth ;$
where M is the frequency offset of frequency hopping indicated in the frequency hopping related information; the uplink BWP bandwidth represents a quantity of RBs occupied by the uplink BWP, and the uplink subband bandwidth represents a quantity of RBs occupied by the uplink subband.

Optionally, the first index is: mod(X+1, 2); the second index is: mod(X+Q, 4); where X is the index corresponding to the frequency offset of frequency hopping indicated in the frequency hopping related information; Q is 1, 2, or 3.

Optionally, the processor is configured to read the computer program in the memory and perform the following operations:
receiving Downlink Control Information (DCI) scheduling a Physical Uplink Shared Channel (PUSCH), where the DCI carries the frequency hopping related information; the frequency hopping related information includes frequency offset information of frequency hopping;
determining the length of the first field in the DCI based on the bandwidth of the activated uplink BWP and/or the bandwidth of the uplink subband, where the first field is used to indicate the frequency offset information of frequency hopping.

Optionally, the processor is configured to read the computer program in the memory and perform the following operations:
if the PUSCH scheduled by the DCI is within the uplink subband range, and the bandwidth of the activated uplink BWP or the bandwidth of the uplink subband is less than a fourth value, the length of the first field is 1 bit;
if the PUSCH scheduled by the DCI is within the uplink subband range, and the bandwidth of the activated uplink BWP or the bandwidth of the uplink subband is greater than or equal to the fourth value, the length of the first field is 2 bits.

Optionally, the DCI further includes a second field, and the second field is used to indicate whether the PUSCH scheduled by the DCI is located within the uplink subband range or within the activated uplink BWP range.

In FIG. 5, the bus architecture may include any number of interconnected buses and bridges. Specifically, various circuits of the one or more processors represented by the processor 510 and the memory represented by the memory 520 are linked together. The bus architecture may also link various other circuits such as peripheral devices, voltage regulators, and power management circuits, which are well known in the art and will not be further described herein. The bus interface provides an interface. The transceiver 500 may be multiple elements, i.e., including a transmitter and a receiver, providing units for communicating with various other devices over a transmission medium. For different user devices, the user interface 550 may also be an interface capable of connecting to external or internal required devices, and the connected devices include but are not limited to a keypad, a display, a speaker, a microphone, a joystick, etc.

The processor 510 is responsible for managing the bus architecture and general processing, and the memory 520 may store data used by the processor 510 when performing operations.

Optionally, the processor 510 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

The processor executes any one of the methods provided in the embodiments of the present disclosure according to the obtained executable instructions by calling the computer program stored in the memory. The processor and the memory may also be physically separated.

It should be noted that the terminal provided in the embodiments of the present disclosure can implement all the method steps implemented by the method embodiment applied to the terminal and achieve the same technical effect, which will not be described in detail in this embodiment.

As shown in FIG. 6, an embodiment of the present disclosure further provides a network device, including: a memory 620, a transceiver 600, and a processor 610; wherein the memory 620 is configured to store a computer program; the transceiver 600 is configured to receive and send data under the control of the processor 610; the processor 610 is configured to read the computer program in the memory and perform the following operations:
sending frequency hopping related information to a terminal, where the frequency hopping related information is used by the terminal to determine whether to enable frequency hopping and/or the frequency offset of frequency hopping on the SBFD symbol, and determine whether to enable frequency hopping and/or the frequency offset of frequency hopping on the uplink symbol;
wherein the frequency hopping related information indicates whether to enable frequency hopping and/or frequency offset information of frequency hopping.

Optionally, the processor is configured to read the computer program in the memory and perform the following operations:
sending DCI scheduling the PUSCH to the terminal, where the DCI carries the frequency hopping related information; the frequency hopping related information includes frequency offset information of frequency hopping;
determining the length of the first field in the DCI based on the bandwidth of the activated uplink BWP and/or the bandwidth of the uplink subband, where the first field is used to indicate the frequency offset information of frequency hopping.

Optionally, the processor is configured to read the computer program in the memory and perform the following operations:
if the PUSCH scheduled by the DCI is within the uplink subband range, and the bandwidth of the activated uplink BWP or the bandwidth of the uplink subband is less than a fourth value, the length of the first field is 1 bit;
if the PUSCH scheduled by the DCI is within the uplink subband range, and the bandwidth of the activated uplink BWP or the bandwidth of the uplink subband is greater than or equal to the fourth value, the length of the first field is 2 bits.

Optionally, the DCI further includes a second field, and the second field is used to indicate whether the PUSCH scheduled by the DCI is located within the uplink subband range or within the activated uplink BWP range.

In FIG. 6, the bus architecture may include any number of interconnected buses and bridges. Specifically, various circuits of the one or more processors represented by the processor 610 and the memory represented by the memory 620 are linked together. The bus architecture may also link various other circuits such as peripheral devices, voltage regulators, and power management circuits, which are well known in the art and will not be further described herein. The bus interface provides an interface. The transceiver 600 may be multiple elements, i.e., including a transmitter and a receiver, providing units for communicating with various other devices over a transmission medium. The processor 610 is responsible for managing the bus architecture and general processing, and the memory 620 may store data used by the processor 610 when performing operations.

The processor 610 may be a CPU, an ASIC, an FPGA, or a CPLD, and the processor may also adopt a multi-core architecture.

It should be noted that the network device provided in the embodiments of the present disclosure can implement all the method steps implemented by the method embodiment applied to the network device and achieve the same technical effect, which will not be described in detail in this embodiment.

In addition, specific embodiments of the present disclosure further provide a processor-readable storage medium on which a computer program is stored. When the program is executed by a processor, the steps of the above frequency hopping information determination method are implemented, and the same technical effect can be achieved. To avoid repetition, details are not described herein again. The readable storage medium may be any available medium or data storage device that can be accessed by a processor, including but not limited to a magnetic memory (such as a floppy disk, a hard disk, a magnetic tape, a Magneto-Optical Disk (MO), etc.), an optical memory (such as a Compact Disc (CD), a Digital Versatile Disc (DVD), a Blu-ray Disc (BD), a High-Definition Versatile Disc (HVD), etc.), and a semiconductor memory (such as a Read-Only Memory (ROM), an Erasable Programmable Read-Only Memory (EPROM), an Electrically Erasable Programmable Read-Only Memory (EEPROM), a NAND FLASH, a Solid State Drive (SSD), etc.).

It should be noted that the technical solutions provided in the embodiments of the present disclosure can be applied to various systems, especially the 5th-Generation (5G) system. For example, the applicable systems may be a Global System for Mobile Communications (GSM) system, a Code Division Multiple Access (CDMA) system, a Wideband Code Division Multiple Access (WCDMA) General Packet Radio Service (GPRS) system, a Long Term Evolution (LTE) system, an LTE Frequency Division Duplex (FDD) system, an LTE Time Division Duplex (TDD) system, an Advanced Long Term Evolution (LTE-A) system, a Universal Mobile Telecommunication System (UMTS), a Worldwide Interoperability for Microwave Access (WiMAX) system, a 5G New Radio (NR) system, etc. These systems all include terminal devices and network devices. The system may further include a core network part, such as an Evolved Packet System (EPS), a 5G System (5GS), etc.

The terminal device involved in the embodiments of the present disclosure may be a device that provides voice and/or data connectivity to a user, a handheld device with a wireless connection function, or another processing device connected to a wireless modem. In different systems, the name of the terminal device may also be different. For example, in the 5G system, the terminal device may be referred to as User Equipment (UE). The wireless terminal device may communicate with one or more core networks (CN) through a Radio Access Network (RAN). The wireless terminal device may be a mobile terminal device, such as a mobile phone (or called a "cellular" phone) and a computer with a mobile terminal device. For example, it may be a portable, pocket-sized, handheld, computer-built-in, or vehicle-mounted mobile device that exchanges voice and/or data with the wireless access network. For example, devices such as a Personal Communication Service (PCS) phone, a cordless phone, a Session Initiated Protocol (SIP) phone, a Wireless Local Loop (WLL) station, or a Personal Digital Assistant (PDA). The wireless terminal device may also be called a system, a subscriber unit, a subscriber station, a mobile station, a mobile terminal, a remote station, an access point, a remote terminal, an access terminal, a user terminal, a user agent, or a user device, which is not limited in the embodiments of the present disclosure.

The network device involved in the embodiments of the present disclosure may be a base station, and the base station may include multiple cells serving terminals. According to different specific application scenarios, the base station may also be called an access point, or a device in the access network that communicates with a wireless terminal device through one or more sectors on the air interface, or another name. The network device may be used to convert the received air frame into an Internet Protocol (IP) packet and vice versa, acting as a router between the wireless terminal device and the rest of the access network, where the rest of the access network may include an Internet Protocol (IP) communication network. The network device may also coordinate the attribute management of the air interface. For example, the network device involved in the embodiments of the present disclosure may be a Base Transceiver Station (BTS) in the Global System for Mobile Communications (GSM) or Code Division Multiple Access (CDMA), a network device (NodeB) in Wideband Code Division Multiple Access (WCDMA), an Evolved Node B (eNB or e-NodeB) in the Long Term Evolution (LTE) system, a 5G base station (gNB) in the next-generation system, a Home Evolved Node B (HeNB), a relay node, a home base station (femto), a pico base station (pico), etc., which is not limited in the embodiments of the present disclosure. In some network structures, the network device may include a Central Unit (CU) node and a Distributed Unit (DU) node, and the centralized unit and the distributed unit may also be geographically separated.

The network device and the terminal device may each use one or more antennas for Multi-Input Multi-Output (MIMO) transmission. The MIMO transmission may be Single User MIMO (SU-MIMO) or Multiple User MIMO (MU-MIMO). According to the shape and quantity of the antenna combinations, MIMO transmission may be Two-Dimensional MIMO (2D-MIMO), Three-Dimensional MIMO (3D-MIMO), Full Dimension MIMO (FD-MIMO), or massive MIMO (massive-MIMO), and may also be diversity transmission, precoding transmission, beamforming transmission, etc.

Those skilled in the art should understand that the embodiments of the present disclosure may be provided as a method, a system, or a computer program product. Therefore, the present disclosure may adopt the form of an entire hardware embodiment, an entire software embodiment, or an embodiment combining software and hardware aspects. Moreover, the present disclosure may adopt the form of a computer program product implemented on one or more computer-usable storage media (including but not limited to magnetic disk storage and optical storage) containing computer-usable program codes.

The present disclosure is described with reference to flowcharts and/or block diagrams of methods, devices (systems), and computer program products according to the embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions can be provided to the processor of a general-purpose computer, a special-purpose computer, an embedded processor, or other programmable data processing devices to generate a machine, so that the instructions executed by the processor of the computer or other programmable data processing devices generate an apparatus for implementing the functions specified in one or more flows in the flowcharts and/or one or more blocks in the block diagrams.

These processor-executable instructions can also be stored in a processor-readable memory that can guide a computer or other programmable data processing device to work in a specific manner, so that the instructions stored in the processor-readable memory generate an article of manufacture including an instruction apparatus, which implements the functions specified in one or more flows in the flowcharts and/or one or more blocks in the block diagrams.

These processor-executable instructions can also be loaded onto a computer or other programmable data processing device, so that a series of operation steps are executed on the computer or other programmable device to generate computer-implemented processing, so that the instructions executed on the computer or other programmable device provide steps for implementing the functions specified in one or more flows in the flowcharts and/or one or more blocks in the block diagrams.

It should be noted that the division of the above modules is only a logical function division, and in actual implementation, all or part of them may be integrated into a physical entity, or may be physically separated. Moreover, these modules can all be implemented in the form of software called by a processing element; or can all be implemented in the form of hardware; or some modules can be implemented in the form of software called by a processing element, and some modules can be implemented in the form of hardware. For example, the determining module may be a separately set processing element, or may be integrated into a chip of the above device. In addition, the determining module may also be stored in the memory of the above device in the form of program code, and the function of the determining module is called and executed by a processing element of the above device. The implementation of other modules is similar. In addition, all or part of these modules can be integrated together, or can be implemented independently. The processing element described herein may be an integrated circuit with signal processing capabilities. In the implementation process, each step of the above method or each module above can be completed by an integrated logic circuit of hardware in the processor element or an instruction in the form of software.

For example, each module, unit, subunit, or submodule may be one or more integrated circuits configured to implement the above method, such as one or more Application-Specific Integrated Circuits (ASICs), or one or more microprocessors (Digital Signal Processors, DSPs), or one or more Field Programmable Gate Arrays (FPGAs), etc. For another example, when the above module is implemented in the form of scheduling program code by a processing element, the processing element may be a general-purpose processor, such as a Central Processing Unit (CPU) or other processors that can call program code. For another example, these modules can be integrated together and implemented in the form of a System-on-a-Chip (SOC).

The terms "first", "second", etc. in the specification and claims of the present disclosure are used to distinguish similar objects, and are not necessarily used to describe a specific order or sequence. It should be understood that the term used in this way can be interchanged under appropriate circumstances, so that the embodiments of the present disclosure described herein can be implemented in an order other than those illustrated or described herein. In addition, the terms "including" and "having" and any variations thereof are intended to cover non-exclusive inclusion. For example, a process, method, system, product, or device that includes a series of steps or units is not necessarily limited to the clearly listed steps or units, but may include other steps or units that are not clearly listed or are inherent to these processes, methods, products, or devices. In addition, the use of "and/or" in the specification and claims indicates at least one of the connected objects. For example, A and/or B and/or C indicates seven cases including A alone, B alone, C alone, both A and B, both B and C, both A and C, and both A, B, and C. Similarly, the use of "at least one of A and B" in the specification and claims should be understood as "A alone, B alone, or both A and B".

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. A frequency hopping information determination method, comprising:
receiving, by a terminal, frequency hopping related information sent by a network device;
determining, by the terminal based on the frequency hopping related information, whether to enable frequency hopping and/or a frequency offset of frequency hopping on a Subband Full Duplex (SBFD) symbol, and determining whether to enable frequency hopping and/or a frequency offset of frequency hopping on an uplink symbol;
wherein the frequency hopping related information indicates whether to enable frequency hopping and/or frequency offset information of frequency hopping.

2. The method according to claim 1, wherein determining, by the terminal based on the frequency hopping related information, whether to enable frequency hopping on the SBFD symbol and determining whether to enable frequency hopping on the uplink symbol comprises at least one of the following:
if the frequency hopping related information indicates that frequency hopping is disabled, disabling frequency hopping on the SBFD symbol and disabling frequency hopping on the uplink symbol;
if the frequency hopping related information indicates that frequency hopping is enabled, enabling frequency hopping on the uplink symbol, and determining, based on first information, whether to enable frequency hopping on the SBFD symbol.

3. The method according to claim 2, wherein the determining based on the first information whether to enable frequency hopping on the SBFD symbol comprises at least one of the following:
the first information comprises frequency domain resource configuration information on the SBFD symbol and/or frequency domain resource allocation information on the SBFD symbol; if it is determined based on the first information that a quantity of Resource Blocks (RBs) corresponding to the frequency domain resources allocated or configured on the SBFD symbol is greater than or equal to a first value, disabling frequency hopping on the SBFD symbol; if a quantity of RBs corresponding to the frequency domain resources allocated on the SBFD symbol is less than or equal to the first value, enabling frequency hopping on the SBFD symbol; if the first value is related to a size of an uplink subband, the first information further comprises uplink subband information;
the first information comprises frequency domain resource configuration information on the SBFD symbol and/or frequency domain resource allocation information on the SBFD symbol, and uplink subband information; if a frequency domain position of each hop determined according to a starting RB of each of two hops is within an uplink subband range indicated by the uplink subband information, then enabling frequency hopping on the SBFD symbol; if a frequency domain position determined according to a starting RB of any one of two hops is outside an uplink subband range, then disabling frequency hopping on the SBFD symbol;
the first information comprises frequency domain resource configuration information on the SBFD symbol and/or frequency domain resource allocation information on the SBFD symbol, and frequency offset information of frequency hopping; if frequency offset between starting RBs of two hops is greater than or equal to a second value, then enabling frequency hopping on the SBFD symbol; if frequency offset between starting RBs of two hops is less than or equal to a second value, then disabling frequency hopping on the SBFD symbol;
the first information comprises frequency domain resource configuration information on the SBFD symbol and/or frequency domain resource allocation information on the SBFD symbol, uplink subband information, and frequency offset information of frequency hopping; if a frequency domain position of each hop determined according to a starting RB of each of two hops is within an uplink subband range indicated by the uplink subband information, and frequency offset between starting RBs of two hops is greater than or equal to the second value, then enabling frequency hopping on the SBFD symbol; if a frequency domain position determined according to a starting RB of any one of two hops is outside an uplink subband range indicated by the uplink subband information, and/or the frequency offset between starting RBs of two hops is less than or equal to the second value, then disabling frequency hopping on the SBFD symbol.

4. The method according to claim 3, further comprising:
determining a starting RB position of each hop in the two hops according to a first starting RB position indicated by the frequency domain resource allocation information or the frequency domain configuration information on the SBFD symbol and the frequency offset indicated by the frequency offset information of frequency hopping;
determining whether a frequency domain position of each hop is within the uplink subband range indicated by the uplink subband information according to a RB length indicated by the frequency domain resource allocation information or the frequency domain resource configuration information on the SBFD symbol and the starting RB position of each hop.

5. The method according to claim 3, further comprising:
determining a starting RB position of each hop in the two hops according to a first starting RB position indicated by the frequency domain resource allocation information or the frequency domain resource configuration information on the SBFD symbol and the frequency offset indicated by the frequency offset information of frequency hopping;
determining whether the frequency offset between starting RBs of the two hops is greater than or equal to the second value according to a starting RB position of each hop.

6. The method according to claim 4 or 5, wherein determining the starting RB position of each hop in the two hops according to the first starting RB position indicated by the frequency domain resource allocation information or the frequency domain resource configuration information on the SBFD symbol and the frequency offset indicated by the frequency offset information of frequency hopping comprises:
determining the starting RB position of each hop in the two hops according to the first starting RB position indicated by the frequency domain resource allocation information or the frequency domain resource configuration information on the SBFD symbol, the frequency offset indicated by the frequency offset information of frequency hopping, and second information;
wherein the second information comprises at least one of the following:
a quantity of RBs comprised in a Bandwidth Part (BWP);
a quantity of RBs comprised in the uplink subband;
a slot index of a slot where the multi-slot transmission is located;
an index of a SBFD symbol within a slot range where the multi-slot transmission is located;
an index of an uplink symbol within a slot range where the multi-slot transmission is located;
an index of a repeated transmission count;
a relative index of a slot where the multi-slot transmission is located;
an index of a SBFD configuration period;
an index of a Time Division Duplex (TDD) configuration period.

7. The method according to claim 1, wherein determining, by the terminal based on the frequency hopping related information, the frequency offset of frequency hopping on the SBFD symbol and determining the frequency offset of frequency hopping on the uplink symbol comprises at least one of the following:
determining that the frequency offset on the uplink symbol is the frequency offset of frequency hopping indicated in the frequency hopping related information, and determining the frequency offset on the SBFD symbol according to a first rule;
determining that the frequency offset on the SBFD symbol is the frequency offset of frequency hopping indicated in the frequency hopping related information, and determining the frequency offset on the uplink symbol according to a second rule.

8. The method according to claim 7, wherein the first rule comprises at least one of the following:
determining the frequency offset on the SBFD symbol based on the frequency offset of frequency hopping indicated in the frequency hopping related information, an uplink BWP bandwidth, and an uplink subband bandwidth;
if an activated uplink BWP bandwidth is less than a third value, then the frequency offset on the SBFD symbol is a frequency offset corresponding to a first index; if an activated uplink BWP bandwidth is greater than or equal to the third value, then the frequency offset on the SBFD symbol is a frequency offset corresponding to a second index; the first index and the second index are related to the index corresponding to the frequency offset of frequency hopping indicated in the frequency hopping related information.

9. The method according to claim 7, wherein the second rule comprises at least one of the following:
determining the frequency offset on the uplink symbol based on the frequency offset of frequency hopping indicated in the frequency hopping related information, the uplink BWP bandwidth, and the uplink subband bandwidth;
if the activated uplink BWP bandwidth is less than the third value, then the frequency offset on the uplink symbol is the frequency offset corresponding to the first index; if the activated uplink BWP bandwidth is greater than or equal to the third value, then the frequency offset on the uplink symbol is the frequency offset corresponding to the second index; the first index and the second index are related to an index corresponding to the frequency offset of frequency hopping indicated in the frequency hopping related information.

10. The method according to claim 8, wherein determining the frequency offset on the SBFD symbol based on the frequency offset of frequency hopping indicated in the frequency hopping related information, the uplink BWP bandwidth, and the uplink subband bandwidth comprises:
determining the frequency offset on the SBFD symbol by the following formula: $\left⌊\frac{M}{Uplink BWP Bandwidth}\right⌋ ∗ Uplink Subband Bandwidth ;$ or $\left⌈\frac{M}{UplinkBWPBandwidth}\right⌉ ∗ UplinkSubbandBandwidth ;$
wherein M is the frequency offset of frequency hopping indicated in the frequency hopping related information; the uplink BWP bandwidth represents a quantity of RBs occupied by the uplink BWP, and the uplink subband bandwidth represents a quantity of RBs occupied by the uplink subband.

11. The method according to claim 9, wherein determining the frequency offset on the uplink symbol based on the frequency offset of frequency hopping indicated in the frequency hopping related information, the uplink BWP bandwidth, and the uplink subband bandwidth comprises:
determining the frequency offset on the uplink symbol by the following formula: $\left⌊\frac{M}{UplinkSubbandBandwidth}\right⌋ ∗ UplinkBWPBandwidth ;$ or $\left⌈\frac{M}{UplinkSubbandBandwidth}\right⌉ ∗ UplinkBWPBandwidth ;$
wherein M is the frequency offset of frequency hopping indicated in the frequency hopping related information; the uplink BWP bandwidth represents a quantity of RBs occupied by the uplink BWP, and the uplink subband bandwidth represents a quantity of RBs occupied by the uplink subband.

12. The method according to claim 8 or 9, wherein the first index is: mod (X+1, 2);
the second index is: mod (X+Q, 4);
wherein X is the index corresponding to the frequency offset of frequency hopping indicated in the frequency hopping related information; Q is 1, 2, or 3.

13. The method according to claim 1, wherein receiving the frequency hopping related information sent by the network device comprises:
receiving Downlink Control Information (DCI) scheduling a Physical Uplink Shared Channel (PUSCH), wherein the DCI carries the frequency hopping related information; the frequency hopping related information comprises frequency offset information of frequency hopping;
the method further comprises: determining a length of a first field in the DCI based on a bandwidth of the activated uplink BWP and/or a bandwidth of the uplink subband, wherein the first field is used to indicate the frequency offset information of frequency hopping.

14. The method according to claim 13, wherein determining the length of the first field in the DCI based on the bandwidth of the activated uplink BWP and/or the bandwidth of the uplink subband comprises:
if the PUSCH scheduled by the DCI is within the uplink subband range, and the bandwidth of the activated uplink BWP or the bandwidth of the uplink subband is less than a fourth value, the length of the first field is 1 bit;
if the PUSCH scheduled by the DCI is within the uplink subband range, and the bandwidth of the activated uplink BWP or the bandwidth of the uplink subband is greater than or equal to the fourth value, the length of the first field is 2 bits.

15. The method according to claim 13, wherein the DCI further comprises a second field, and the second field is used to indicate whether the PUSCH scheduled by the DCI is located within the uplink subband range or within the activated uplink BWP range.

16. A frequency hopping information determination method, comprising:
sending, by a network device, frequency hopping related information to a terminal, wherein the frequency hopping related information is used by the terminal to determine whether to enable frequency hopping and/or a frequency offset of frequency hopping on the SBFD symbol, and determine whether to enable frequency hopping and/or a frequency offset of frequency hopping on the uplink symbol;
wherein the frequency hopping related information indicates whether to enable frequency hopping and/or frequency offset information of frequency hopping.

17. A terminal, comprising:
a memory, a transceiver, and a processor,
wherein the memory is configured to store a computer program; the transceiver is configured to receive and send data under the control of the processor; the processor is configured to read the computer program in the memory and perform the following operations:
receiving frequency hopping related information sent by a network device;
determining, based on the frequency hopping related information, whether to enable frequency hopping and/or a frequency offset of frequency hopping on a Subband Full Duplex (SBFD) symbol, and determining whether to enable frequency hopping and/or a frequency offset of frequency hopping on an uplink symbol;
wherein the frequency hopping related information indicates whether to enable frequency hopping and/or frequency offset information of frequency hopping.

18. The terminal according to claim 17, wherein the processor is configured to read the computer program in the memory and perform at least one of the following operations:
if the frequency hopping related information indicates that frequency hopping is disabled, disabling frequency hopping on the SBFD symbol and disabling frequency hopping on the uplink symbol;
if the frequency hopping related information indicates that frequency hopping is enabled, enabling frequency hopping on the uplink symbol, and determining, based on first information, whether to enable frequency hopping on the SBFD symbol.

19. The terminal according to claim 18, wherein the processor is configured to read the computer program in the memory and perform at least one of the following operations:
the first information comprises frequency domain resource configuration information on the SBFD symbol and/or frequency domain resource allocation information on the SBFD symbol; if it is determined based on the first information that a quantity of Resource Blocks (RBs) corresponding to the frequency domain resources allocated or configured on the SBFD symbol is greater than or equal to a first value, disabling frequency hopping on the SBFD symbol; if a quantity of RBs corresponding to the frequency domain resources allocated on the SBFD symbol is less than or equal to the first value, enabling frequency hopping on the SBFD symbol; if the first value is related to a size of an uplink subband, the first information further comprises uplink subband information;
the first information comprises frequency domain resource configuration information on the SBFD symbol and/or frequency domain resource allocation information on the SBFD symbol, and uplink subband information; if a frequency domain position of each hop determined according to a starting RB of each of two hops is within an uplink subband range indicated by the uplink subband information, then enabling frequency hopping on the SBFD symbol; if a frequency domain position determined according to a starting RB of any one of two hops is outside an uplink subband range, then disabling frequency hopping on the SBFD symbol;
the first information comprises frequency domain resource configuration information on the SBFD symbol and/or frequency domain resource allocation information on the SBFD symbol, and frequency offset information of frequency hopping; if frequency offset between starting RBs of two hops is greater than or equal to a second value, then enabling frequency hopping on the SBFD symbol; if frequency offset between starting RBs of two hops is less than or equal to a second value, then disabling frequency hopping on the SBFD symbol;
the first information comprises frequency domain resource configuration information on the SBFD symbol and/or frequency domain resource allocation information on the SBFD symbol, uplink subband information, and frequency offset information of frequency hopping; if a frequency domain position of each hop determined according to a starting RB of each of two hops is within an uplink subband range indicated by the uplink subband information, and frequency offset between starting RBs of two hops is greater than or equal to the second value, then enabling frequency hopping on the SBFD symbol; if a frequency domain position determined according to a starting RB of any one of two hops is outside an uplink subband range indicated by the uplink subband information, and/or the frequency offset between starting RBs of two hops is less than or equal to the second value, then disabling frequency hopping on the SBFD symbol.

20. The terminal according to claim 19, wherein the processor is configured to read the computer program in the memory and perform the following operations:
determining a starting RB position of each hop in the two hops according to a first starting RB position indicated by the frequency domain resource allocation information or the frequency domain configuration information on the SBFD symbol and the frequency offset indicated by the frequency offset information of frequency hopping;
determining whether a frequency domain position of each hop is within the uplink subband range indicated by the uplink subband information according to a RB length indicated by the frequency domain resource allocation information or the frequency domain resource configuration information on the SBFD symbol and the starting RB position of each hop.

21. The terminal according to claim 19, wherein the processor is configured to read the computer program in the memory and perform the following operations:
determining a starting RB position of each hop in the two hops according to a first starting RB position indicated by the frequency domain resource allocation information or the frequency domain resource configuration information on the SBFD symbol and the frequency offset indicated by the frequency offset information of frequency hopping;
determining whether the frequency offset between starting RBs of the two hops is greater than or equal to the second value according to a starting RB position of each hop.

22. The terminal according to claim 20 or 21, wherein the processor is configured to read the computer program in the memory and perform the following operations:
determining the starting RB position of each hop in the two hops according to the first starting RB position indicated by the frequency domain resource allocation information or the frequency domain resource configuration information on the SBFD symbol, the frequency offset indicated by the frequency offset information of frequency hopping, and second information;
wherein the second information comprises at least one of the following:
a quantity of RBs comprised in a Bandwidth Part (BWP);
a quantity of RBs comprised in the uplink subband;
a slot index of a slot where the multi-slot transmission is located;
an index of a SBFD symbol within a slot range where the multi-slot transmission is located;
an index of an uplink symbol within a slot range where the multi-slot transmission is located;
an index of a repeated transmission count;
a relative index of a slot where the multi-slot transmission is located;
an index of a SBFD configuration period;
an index of a Time Division Duplex (TDD) configuration period.

23. The terminal according to claim 17, wherein the processor is configured to read the computer program in the memory and perform at least one of the following operations:
determining that the frequency offset on the uplink symbol is the frequency offset of frequency hopping indicated in the frequency hopping related information, and determining the frequency offset on the SBFD symbol according to a first rule;
determining that the frequency offset on the SBFD symbol is the frequency offset of frequency hopping indicated in the frequency hopping related information, and determining the frequency offset on the uplink symbol according to a second rule.

24. The terminal according to claim 23, wherein the first rule comprises at least one of the following:
determining the frequency offset on the SBFD symbol based on the frequency offset of frequency hopping indicated in the frequency hopping related information, an uplink BWP bandwidth, and an uplink subband bandwidth;
if an activated uplink BWP bandwidth is less than a third value, then the frequency offset on the SBFD symbol is a frequency offset corresponding to a first index; if an activated uplink BWP bandwidth is greater than or equal to the third value, then the frequency offset on the SBFD symbol is a frequency offset corresponding to a second index; the first index and the second index are related to the index corresponding to the frequency offset of frequency hopping indicated in the frequency hopping related information.

25. The terminal according to claim 23, wherein the second rule comprises at least one of the following:
determining the frequency offset on the uplink symbol based on the frequency offset of frequency hopping indicated in the frequency hopping related information, the uplink BWP bandwidth, and the uplink subband bandwidth;
if the activated uplink BWP bandwidth is less than the third value, then the frequency offset on the uplink symbol is the frequency offset corresponding to the first index; if the activated uplink BWP bandwidth is greater than or equal to the third value, then the frequency offset on the uplink symbol is the frequency offset corresponding to the second index; the first index and the second index are related to an index corresponding to the frequency offset of frequency hopping indicated in the frequency hopping related information.

26. The terminal according to claim 17, wherein the processor is configured to read the computer program in the memory and perform the following operations:
receiving Downlink Control Information (DCI) scheduling a Physical Uplink Shared Channel (PUSCH), wherein the DCI carries the frequency hopping related information; the frequency hopping related information comprises frequency offset information of frequency hopping;
determining a length of a first field in the DCI based on a bandwidth of the activated uplink BWP and/or a bandwidth of the uplink subband, wherein the first field is used to indicate the frequency offset information of frequency hopping.

27. The terminal according to claim 26, wherein the processor is configured to read the computer program in the memory and perform the following operations:
if the PUSCH scheduled by the DCI is within the uplink subband range, and the bandwidth of the activated uplink BWP or the bandwidth of the uplink subband is less than a fourth value, the length of the first field is 1 bit;
if the PUSCH scheduled by the DCI is within the uplink subband range, and the bandwidth of the activated uplink BWP or the bandwidth of the uplink subband is greater than or equal to the fourth value, the length of the first field is 2 bits.

28. The terminal according to claim 27, wherein the DCI further comprises a second field, and the second field is used to indicate whether the PUSCH scheduled by the DCI is located within the uplink subband range or within the activated uplink BWP range.

29. A network device, comprising:
a memory, a transceiver, and a processor,
wherein the memory is configured to store a computer program; the transceiver is configured to receive and send data under the control of the processor; the processor is configured to read the computer program in the memory and perform the following operations:
sending frequency hopping related information to a terminal, wherein the frequency hopping related information is used by the terminal to determine whether to enable frequency hopping and/or a frequency offset of frequency hopping on the SBFD symbol, and determine whether to enable frequency hopping and/or a frequency offset of frequency hopping on the uplink symbol;
wherein the frequency hopping related information indicates whether to enable frequency hopping and/or frequency offset information of frequency hopping.

30. A frequency hopping information determination apparatus, comprising:
a first receiving unit, configured to receive frequency hopping related information sent by a network device;
a first determining unit, configured to determine, based on the frequency hopping related information, whether to enable frequency hopping and/or a frequency offset of frequency hopping on a Subband Full Duplex (SBFD) symbol, and determine whether to enable frequency hopping and/or a frequency offset of frequency hopping on an uplink symbol;
wherein the frequency hopping related information indicates whether to enable frequency hopping and/or frequency offset information of frequency hopping.

31. The apparatus according to claim 30, wherein the first determining unit is specifically configured to perform at least one of the following:
if the frequency hopping related information indicates that frequency hopping is disabled, disabling frequency hopping on the SBFD symbol and disabling frequency hopping on the uplink symbol;
if the frequency hopping related information indicates that frequency hopping is enabled, enabling frequency hopping on the uplink symbol, and determining, based on first information, whether to enable frequency hopping on the SBFD symbol.

32. The apparatus according to claim 31, wherein the first determining unit is specifically configured to perform at least one of the following:
that the first information comprises frequency domain resource configuration information on the SBFD symbol and/or frequency domain resource allocation information on the SBFD symbol; if it is determined based on the first information that a quantity of Resource Blocks (RBs) corresponding to the frequency domain resources allocated or configured on the SBFD symbol is greater than or equal to a first value, disabling frequency hopping on the SBFD symbol; if a quantity of RBs corresponding to the frequency domain resources allocated on the SBFD symbol is less than or equal to the first value, enabling frequency hopping on the SBFD symbol; if the first value is related to a size of an uplink subband, the first information further comprises uplink subband information;
that the first information comprises frequency domain resource configuration information on the SBFD symbol and/or frequency domain resource allocation information on the SBFD symbol, and uplink subband information; if a frequency domain position of each hop determined according to a starting RB of each of two hops is within an uplink subband range indicated by the uplink subband information, then enabling frequency hopping on the SBFD symbol; if a frequency domain position determined according to a starting RB of any one of two hops is outside an uplink subband range, then disabling frequency hopping on the SBFD symbol;
that the first information comprises frequency domain resource configuration information on the SBFD symbol and/or frequency domain resource allocation information on the SBFD symbol, and frequency offset information of frequency hopping; if frequency offset between starting RBs of two hops is greater than or equal to a second value, then enabling frequency hopping on the SBFD symbol; if frequency offset between starting RBs of two hops is less than or equal to a second value, then disabling frequency hopping on the SBFD symbol;
that the first information comprises frequency domain resource configuration information on the SBFD symbol and/or frequency domain resource allocation information on the SBFD symbol, uplink subband information, and frequency offset information of frequency hopping; if a frequency domain position of each hop determined according to a starting RB of each of two hops is within an uplink subband range indicated by the uplink subband information, and frequency offset between starting RBs of two hops is greater than or equal to the second value, then enabling frequency hopping on the SBFD symbol; if a frequency domain position determined according to a starting RB of any one of two hops is outside an uplink subband range indicated by the uplink subband information, and/or the frequency offset between starting RBs of two hops is less than or equal to the second value, then disabling frequency hopping on the SBFD symbol.

33. The apparatus according to claim 32, further comprising:
a second determining unit, configured to determine a starting RB position of each hop in the two hops according to a first starting RB position indicated by the frequency domain resource allocation information or the frequency domain configuration information on the SBFD symbol and the frequency offset indicated by the frequency offset information of frequency hopping;
a third determining unit, configured to determine whether a frequency domain position of each hop is within the uplink subband range indicated by the uplink subband information according to a RB length indicated by the frequency domain resource allocation information or the frequency domain resource configuration information on the SBFD symbol and the starting RB position of each hop.

34. The apparatus according to claim 32, further comprising:
a fourth determining unit, configured to determine a starting RB position of each hop in the two hops according to a first starting RB position indicated by the frequency domain resource allocation information or the frequency domain resource configuration information on the SBFD symbol and the frequency offset indicated by the frequency offset information of frequency hopping;
a fifth determining unit, configured to determine whether the frequency offset between starting RBs of the two hops is greater than or equal to the second value according to a starting RB position of each hop.

35. The apparatus according to claim 33 or 34, wherein the second determining unit or the fourth determining unit is specifically configured to:
determine the starting RB position of each hop in the two hops according to the first starting RB position indicated by the frequency domain resource allocation information or the frequency domain resource configuration information on the SBFD symbol, the frequency offset indicated by the frequency offset information of frequency hopping, and second information;
wherein the second information comprises at least one of the following:
a quantity of RBs comprised in a Bandwidth Part (BWP);
a quantity of RBs comprised in the uplink subband;
a slot index of a slot where the multi-slot transmission is located;
an index of a SBFD symbol within a slot range where the multi-slot transmission is located;
an index of an uplink symbol within a slot range where the multi-slot transmission is located;
an index of a repeated transmission count;
a relative index of a slot where the multi-slot transmission is located;
an index of a SBFD configuration period;
an index of a Time Division Duplex (TDD) configuration period.

36. The apparatus according to claim 30, wherein the first determining unit is specifically configured to perform at least one of the following:
determining that the frequency offset on the uplink symbol is the frequency offset of frequency hopping indicated in the frequency hopping related information, and determining the frequency offset on the SBFD symbol according to a first rule;
determining that the frequency offset on the SBFD symbol is the frequency offset of frequency hopping indicated in the frequency hopping related information, and determining the frequency offset on the uplink symbol according to a second rule.

37. The apparatus according to claim 36, wherein the first rule comprises at least one of the following:
determining the frequency offset on the SBFD symbol based on the frequency offset of frequency hopping indicated in the frequency hopping related information, an uplink BWP bandwidth, and an uplink subband bandwidth;
if an activated uplink BWP bandwidth is less than a third value, then the frequency offset on the SBFD symbol is a frequency offset corresponding to a first index; if an activated uplink BWP bandwidth is greater than or equal to the third value, then the frequency offset on the SBFD symbol is a frequency offset corresponding to a second index; the first index and the second index are related to the index corresponding to the frequency offset of frequency hopping indicated in the frequency hopping related information.

38. The apparatus according to claim 36, wherein the second rule comprises at least one of the following:
determining the frequency offset on the uplink symbol based on the frequency offset of frequency hopping indicated in the frequency hopping related information, the uplink BWP bandwidth, and the uplink subband bandwidth;
if the activated uplink BWP bandwidth is less than the third value, then the frequency offset on the uplink symbol is the frequency offset corresponding to the first index; if the activated uplink BWP bandwidth is greater than or equal to the third value, then the frequency offset on the uplink symbol is the frequency offset corresponding to the second index; the first index and the second index are related to an index corresponding to the frequency offset of frequency hopping indicated in the frequency hopping related information.

39. The apparatus according to claim 30, wherein the first receiving unit is specifically configured to:
receive Downlink Control Information (DCI) scheduling a Physical Uplink Shared Channel (PUSCH), wherein the DCI carries the frequency hopping related information; the frequency hopping related information comprises frequency offset information of frequency hopping;
the apparatus further comprises:
a sixth determining unit, configured to determine a length of a first field in the DCI based on a bandwidth of the activated uplink BWP and/or a bandwidth of the uplink subband, wherein the first field is used to indicate the frequency offset information of frequency hopping.

40. The apparatus according to claim 39, wherein the sixth determining unit is specifically configured to:
if the PUSCH scheduled by the DCI is within the uplink subband range, and the bandwidth of the activated uplink BWP or the bandwidth of the uplink subband is less than a fourth value, the length of the first field is 1 bit;
if the PUSCH scheduled by the DCI is within the uplink subband range, and the bandwidth of the activated uplink BWP or the bandwidth of the uplink subband is greater than or equal to the fourth value, the length of the first field is 2 bits.

41. The apparatus according to claim 40, wherein the DCI further comprises a second field, and the second field is used to indicate whether the PUSCH scheduled by the DCI is located within the uplink subband range or within the activated uplink BWP range.

42. A frequency hopping information determination apparatus, comprising:
a first sending unit, configured to send frequency hopping related information to a terminal, wherein the frequency hopping related information is used by the terminal to determine whether to enable frequency hopping and/or a frequency offset of frequency hopping on the SBFD symbol, and determine whether to enable frequency hopping and/or a frequency offset of frequency hopping on the uplink symbol;
wherein the frequency hopping related information indicates whether to enable frequency hopping and/or frequency offset information of frequency hopping.

43. A processor-readable storage medium, on which a computer program is stored, wherein when the computer program is executed by a processor, the steps of the frequency hopping information determination method according to any one of claims 1 to 16 are implemented, or the steps of the frequency hopping information determination method according to claims 17 to 28 are implemented.
